# EUROPEAN PATENT APPLICATION

(11) **EP 2 716 965 A1**
(43) Date of publication of application: **09.04.2014**
(21) Application number: 13165863.5
(22) Date of filing: 29.04.2013
(51) Int. Cl.: F21V 8/00

(54) **Backlight unit and display device having the same**

(30) Priority: 04.10.2012 KR 20120110118
(71) Applicant: Samsung Display Co., Ltd., Gyeonggi-Do (KR)
(72) Inventor: Kim, Heugon, 1003-2102 Yongin-si, Gyeonggi-do (KR); Kim, Jae-Hyun, 101-504, Seoul (KR); Kim, JooYoung, 103-1002 Suwon-si, Gyeonggi-do (KR); Shim, Sung-Kyu, 102-2106 Seoul (KR); Cho, Chi-o, 107-1904 Gwangju (KR); Hwang, Insun, 201-803 Suwon-si, Gyeonggi-do (KR); Choi, Kwang-Wook, 212-502 Osan-si, Gyeonggi-do (KR)
(74) Representative: Dr. Weitzel & Partner

(57) **Abstract**

A backlight unit (BLU) includes a light guide plate (LGP) including a plurality of light emitting areas and a light source part providing light to the light guide part. The light guide part includes a main light guide part (MLGP) and a sub-light guide part (SLGP) formed as a single piece with the main light guide part (MLGP) or partially overlapped with the main light guide part. A display device includes a display panel displaying an image and the backlight unit.

## Description

### CROSS-REFERENCE TO RELATED APPLICATION

This U.S. non-provisional patent application claims priority under 35 U.S.C. § 119 of Korean Patent Application No. 10-2012-0110118, filed on October 4, 2012 in the Korean Intellectual Property Office, the contents of which are herein incorporated by reference in their entirety.

### BACKGROUND

### 1. Field of disclosure

The present disclosure relates to a backlight unit and a display device having the same. More particularly, the present disclosure relates to an edge-illumination type backlight unit capable of performing a local dimming and a display device having the edge-illumination type backlight unit.

### 2. Description of the Related Art

A liquid crystal display has been adopted as one of flat panel displays that are now widely used. The liquid crystal display includes a display panel including two substrates respectively provided with electrodes and a liquid crystal layer interposed between the two substrates to display an image. However, since the display panel is not self-emissive, the display device is required to include a backlight unit to provide the display panel with light.

The backlight unit is classified into an edge-illumination type backlight unit and a direct-illumination type backlight unit according to the position of a light source block thereof. In the edge-illumination type backlight unit, the light source block is located at a side portion of a rear of the display panel to be adjacent to a side of the display panel, and the light source block is located at the rear position of the display panel.

In recent years, the edge-illumination type backlight unit is much more widely used than the direct-illumination type backlight unit in accordance with a tendency of decreasing the thickness of the liquid crystal display.

Meanwhile, a local dimming method that controls brightness at a required area of areas of the display panel has been researched and developed in order to reduce power consumption of the liquid crystal display.

However, the light emitted from the light source block is diffused to the entire region of a light guide plate in the edge-illumination type backlight unit since the light source block is located at the position adjacent to the side surface of the light guide plate disposed at the rear of the display panel. Therefore, the local dimming method that separately controls the brightness in each area is difficult to be performed.

### SUMMARY

The present disclosure provides a backlight unit capable of reducing a thickness and a power consumption of a liquid crystal display.

The present disclosure provides a display device having the backlight unit.

Embodiments of the inventive concept provide a backlight unit includes a main light guide part that includes a first pattern, a sub-light guide part that includes a second pattern, a main light source part that provides the light to the main light guide part, and a sub-light source part that provides the light to the sub-light guide part and partially overlaps a portion of the main light guide part. The first pattern and the second pattern are not overlapped with each other when viewed from a top.

The sub-light guide part is smaller than the main light guide part.

The main light source part includes a first light source block and a second light source block, which are disposed at both sides of the main light guide part, and the sub-light source part includes a third light source block and a fourth light source block, which are disposed at both sides of the sub-light guide part. Each of the first to the fourth light source blocks includes at least one light source group, and the light source group includes at least one light source. The light source group is provided in a plural number and the light source groups are individually driven.

Embodiments of the inventive concept provide a backlight unit includes a main light guide part that includes a first pattern, a sub-light guide part that includes a second pattern, a main light source part that provides a light to the main light guide part, and a sub-light source part that provides the light to the sub-light guide part, wherein the first pattern does not overlap with the second pattern when viewed from the top. The sub-light guide part is separated from the main light guide part and has a size smaller than a size of the main light guide part.

Embodiments of the inventive concept provide a display device includes a display panel that displays an image and the backlight unit that provides the light to the display panel.

According to the above, a thickness and a power consumption of the backlight unit may be reduced.

### BRIEF DESCRIPTION OF THE DRAWINGS

The above and other advantages of the present invention will become readily apparent by reference to the following detailed description when considered in conjunction with the accompanying drawings wherein:
FIG. 1 is an exploded perspective view showing a display device according to a first exemplary embodiment of the present invention;
FIG. 2 is a cross-sectional view taken along a line I-I' of FIG. 1;
FIG. 3A is a perspective view showing a light source part and a light guide part of the display device according to the first exemplary embodiment of the present invention;
FIG. 3B is a cross-sectional view taken along a line II-II' of FIG. 3A;
FIG. 3C is a plan view showing the light source part and the light guide part shown in FIG. 3A;
FIG. 4 is a block diagram showing a display device according to an exemplary embodiment of the present invention;
FIG. 5 is a plan view showing a plurality of light emitting areas according to an exemplary embodiment of the present invention;
FIG. 6 is a plan view showing a backlight unit according to a second exemplary embodiment of the present invention;
FIG. 7 is a cross-sectional view showing a backlight unit according to a third exemplary embodiment of the present invention;
FIG. 8 is a cross-sectional view showing a backlight unit according to a fourth exemplary embodiment of the present invention;
FIG. 9 is a cross-sectional view taken along the line I-I' of FIG. 1 in a display device according to a fifth exemplary embodiment of the present invention;
FIG. 10A is a perspective view showing a light source part and a light guide part of the display device according to the fifth exemplary embodiment of the present invention;
FIG. 10B is a cross-sectional view taken along a line III-III' of FIG. 10A;
FIG. 10C is a plan view showing the light source part and the light guide part of FIG. 10A;
FIG. 11 is a cross-sectional view showing a display device according to a sixth exemplary embodiment to correspond to the line I-I' of FIG. 1;
FIG. 12A is a perspective view showing a light source part and a light guide part of the display device according to a seventh exemplary embodiment of the present invention;
FIG. 12B is a cross-sectional view taken along a line IV-IV' of FIG. 12A;
FIG. 12C is a plan view showing the light source part and the light guide part of FIG. 12A;
FIG. 13A is a perspective view showing a light source part and a light guide part of the display device according to an eighth exemplary embodiment of the present invention;
FIG. 13B is a cross-sectional view taken along a line IV-IV' of FIG. 13A;
FIG. 13C is a plan view showing the light source part and the light guide part of FIG. 13A;
FIGS. 14A, 14B, and 14B are perspective, cross-sectional, and plan views, respectively, showing an exit pattern formed in the light guide part together with a light guide plate of the light guide part;
FIGS. 15A and 15B are cross-sectional views showing exit patterns according to various exemplary embodiments of the present invention;
FIGS. 15C to 15F are plan views showing exit patterns according to various exemplary embodiments of the present invention;
FIG. 16 is a simulated graph showing brightness in a cross-sectional surface in each light emitting area in a backlight unit according to an exemplary embodiment of the present invention;
FIG. 17A is a perspective view showing a light source part and a light guide part to explain a light guide pattern;
FIG. 17B is a cross-sectional view taken along a line VI-VI' of FIG. 17A;
FIG. 17C is cross-sectional view taken along a line VII-VII' of FIG. 17A; and
FIGS. 18A and 18B are perspective views showing light guide patterns according to various exemplary embodiments of the present invention.

### DETAILED DESCRIPTION

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms, "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

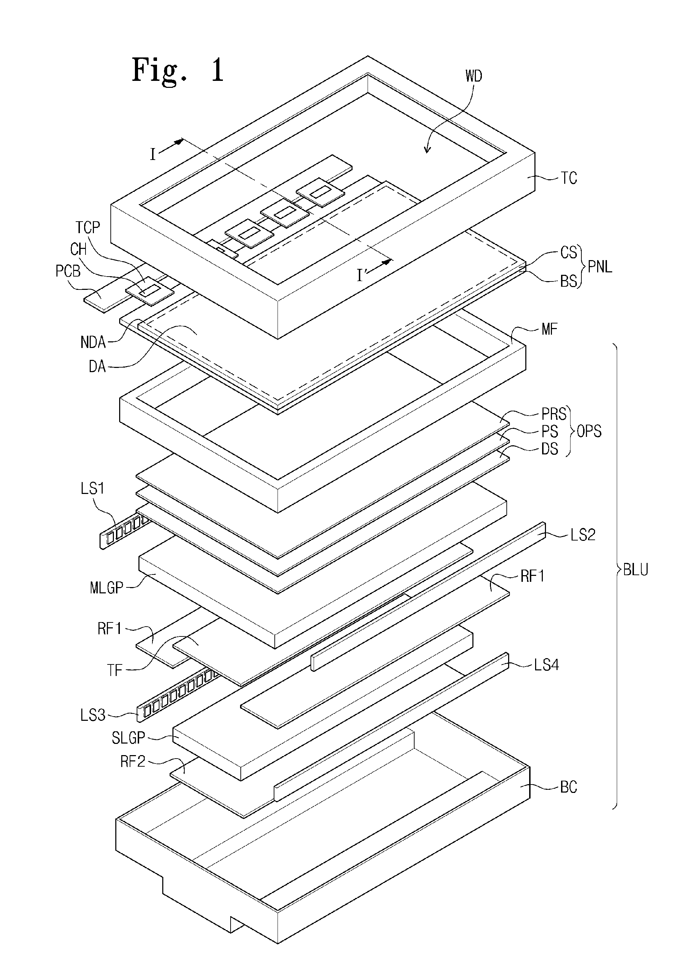

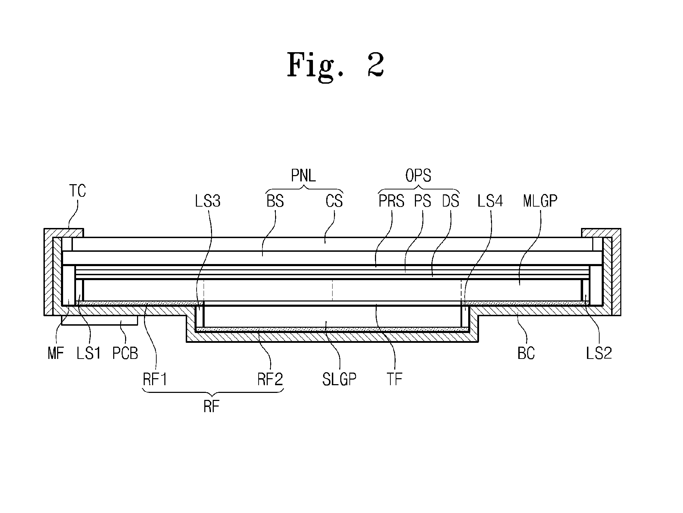

FIG. 1 is an exploded perspective view showing a display device according to a first exemplary embodiment of the present invention and FIG. 2 is a cross-sectional view taken along a line I-I' of FIG. 1.

Referring to FIGS. 1 and 2, the display device includes a display panel PNL, a backlight unit BLU, and a top chassis TC. For the convenience of explanation, a direction in which an image is displayed in the display device will be described as an upper direction and a direction opposite to the upper direction will be described as a lower direction, but they should not be limited thereto or thereby.

The display panel PNL displays the image. The display panel PNL is a non self-emissive display panel. Accordingly, the display panel PNL may be, but not limited to, a liquid crystal display panel, an electrowetting display panel, an electrophoretic display panel, or a microelectromechanical system display panel. In the present exemplary embodiment, the liquid crystal display panel will be described as the display panel PNL.

The display panel PNL has a rectangular plate shape with two pairs of sides meeting at right angles, and one of the two pairs of sides is longer than the other. The display panel PNL includes a base substrate BS, a counter substrate CS opposite to the base substrate BS, and a liquid crystal layer (not shown) disposed between the base substrate BS and the counter substrate CS. When viewed from a top, the display panel PNL includes a display area DA in which an image is displayed and a non-display area NDA, in which the image is not displayed, surrounding the display area DA. The non-display area NDA is covered by the top chassis TC.

The base substrate BS includes a plurality of pixel electrodes (not shown) and a plurality of thin film transistors (not shown) electrically connected to the pixel electrodes. Each thin film transistor switches a driving signal applied to a corresponding pixel electrode of the pixel electrodes. In addition, the opposite substrate CS includes a common electrode (not shown) that forms an electric field in cooperation with the pixel electrodes to control an arrangement of liquid crystal molecules of the liquid crystal layer. The display panel PNL operates the liquid crystal molecules of the liquid crystal layer to display the image in a front direction of the display panel PNL.

The display panel PNL may be provided with a driving chip CH that applies the driving signal, a tape carrier package TCP mounted with the driving chip CH thereon, and a printed circuit board PCB electrically connected to the display panel PNL through the tape carrier package TCP. In FIG. 1, the printed circuit board PCB is disposed on the same plane as the display panel PNL, but it should not be limited thereto or thereby. That is, the printed circuit board PCB may be disposed on an outer surface of a bottom chassis BC. In this case, the tape carrier package TCP is bent along the outer surface of the bottom chassis BC to connect the display panel PNL and the printed circuit board PCB. In addition, the driving chip CH generates the driving signal to drive the display panel PNL in response to an external signal. The external signal is provided from the printed circuit board PCB and includes various signals, e.g., image signals, various control signals, driving voltages, etc.

The backlight unit BLU is disposed under the display panel PNL to provide light to the display panel PNL. The backlight unit BLU includes a mold frame MF to support the display panel PNL, a light source part including a plurality of light sources to emit the light, a light guide part to guide the light to the display panel PNL, optical sheet OPS to improve the efficiency of the light, a reflective sheet RF1 and RF2 to change a direction of the light travels, and the bottom chassis BC to accommodate the display panel PNL, the mold frame MF, the light source part, the light guide part, the optical sheet OPS, and the reflective sheet RF1 and RF2.

The mold frame MF is provided along an edge of the display panel PNL under the display panel PNL to support the display panel PNL. The mold frame MF may include a fixing member, e.g., a catching jaw, so as to fix or support the light source part, the light guide part, and the optical sheet OPS. The mold frame MF may have a shape correspond to sides of the display panel PNL. In detail, the mold frame MF may have a rectangular ring shape corresponding to the four sides of the display panel PNL or a U shape corresponding to three sides of the display panel PNL. The mold frame MF may be integrally formed as a single piece or formed by plural parts. The mold frame MF may be formed of an organic material, e.g., a polymer resin, but the mold frame MF should not be limited to the organic material.

The light guide part is disposed under the display panel PNL to guide the light to the display panel PNL. The light guide part includes a main light guide part MLGP disposed under the display panel PNL and having substantially the same size as the display panel PNL and a sub-light guide part SLGP disposed under the main light guide part MLGP and overlapping with a portion of the main light guide part MLGP.

The main light guide part MLGP and the sub-light guide part SLGP have a rectangular plate shape when viewed from the top. Each side of the rectangular plate shape is substantially in parallel to any one of the long sides and the short sides of the display panel PNL.

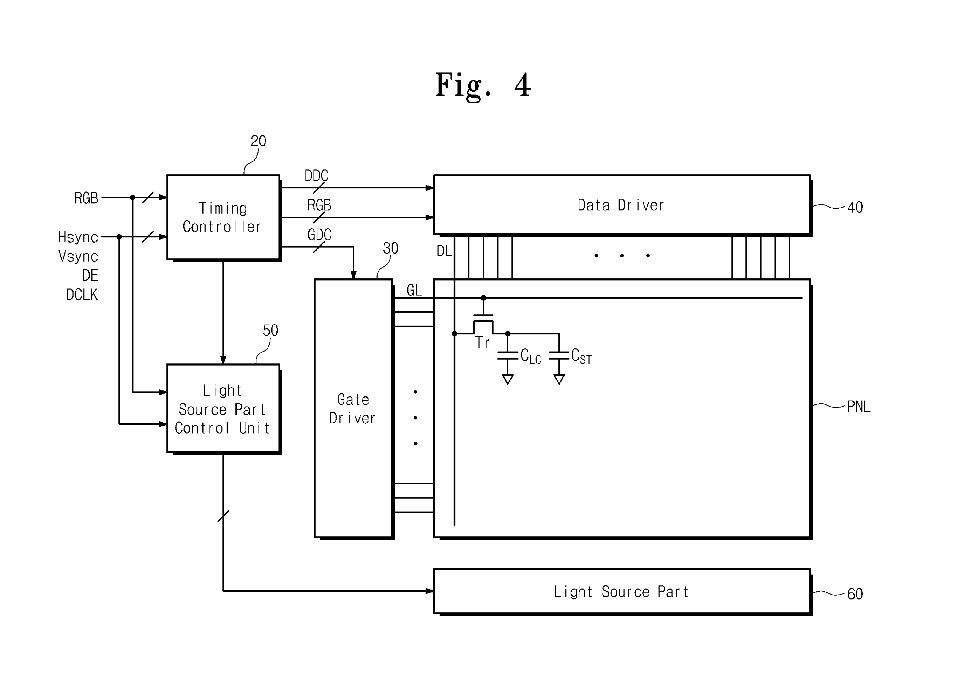

The light source part provides the light to the main light guide part MLGP and the sub-light guide part SLGP. The light source part includes light source blocks LS1, LS2, LS3, and LS4 and is connected to a light source part control unit that controls the light source blocks LS1, LS2, LS3, and LS4. The light source part control unit 50 (refer to FIG. 4) independently controls brightness of each of the light source blocks LS1, LS2, LS3, and LS4 in response to a local dimming signal obtained by analyzing the image displayed on the display panel PNL. The light source blocks LS1, LS2, LS3, and LS4 include first and second light source blocks LS1 and LS2 respectively disposed at both sides of the main light guide part MLGP and third and fourth light source blocks LS3 and LS4 respectively disposed at both sides of the sub-light guide part SLGP. Each light source block includes a plurality of light sources and a supporter supporting the light sources. The supporter may be, but not limited to, a printed circuit board having wirings for supplying a source voltage to the light sources and controlling the light sources. In addition, the supporter has a rectangular plate shape extending along light incident surfaces of the main light guide part MLGP and the sub-light guide part SLGP. Each light source may be, but not limited to, a point light source, a line light source, or a surface light source. As an example, the point light source, e.g., a light emitting diode, will be described as the light source. Plurality of light emitting diodes are arranged along a line on the supporter. Here, the light source means a minimum light emitting unit, which is able to be independently controlled an amount of the light emitted therefrom. Thus, one light source may include one light emitting diode or plural light emitting diodes of which the brightness of the light emitting diodes is substantially simultaneously controlled.

In the first exemplary embodiment, the light source blocks include the printed circuit board and the light sources, but they should not be limited thereto or thereby. That is, the printed circuit board may be omitted. In this case, a separate supporter member supporting the light sources and/or a separate wiring applying the source voltage to the light sources may be prepared.

The main light guide part MLGP, the sub-light guide part SLGP, and the light source part will be described in detail later.

The optical sheet OPS is disposed between the light guide part and the display panel PNL to control the light emitted from the light source. The optical sheet OPS includes a diffusion sheet DS, a prism sheet PS, and a protective sheet PRS.

The diffusion sheet DS diffuses the light. The prism sheet PS condenses the light diffused by the diffusion sheet DS to allow the light exiting from the diffusion sheet DS to travel in a direction substantially vertical to the display panel PNL. The light exiting from the prism sheet PS is vertically incident into the display panel PNL. The protective sheet PRS is disposed on the prism sheet PS to protect the prism sheet PS from external impacts. In the present exemplary embodiment, the optical sheet OPS is configured to include one diffusion sheet DS, one prism sheet PS, and one protective sheet PRS, but they should not be limited thereto or thereby. That is, at least one of the diffusion sheet, the prism sheet PS, and the protective sheet PRS of the optical sheet OPS may be provided in plural number, or one or more of the diffusion sheet DS, the prism sheet PS, and the protective sheet PRS may be omitted from the optical sheet OPS. In addition, the stack order of the diffusion sheet DS, the prism sheet PS, and the protective sheet PRS may be altered.

The reflective sheet RF1 and RF2 is disposed under the light guide part to reflect the light leaked from the light guide part without being directed to the display panel PNL to allow the light leaked from the light guide part to travel to the display panel PNL. The reflective sheet includes a first reflective sheet RF1 disposed under the main light guide part MLGP and a second reflective sheet RF2 disposed under the sub-light guide part SLGP. The first reflective sheet RF1 and the second reflective sheet RF2 are disposed on the bottom chassis BC to reflect the light. As a result, the amount of the light traveling to the display panel PNL is increased by the first and the second reflective sheets RF1 and RF2. The first reflective sheet RF1 covers the third and fourth light source blocks LS3 and LS4, which provide the light to the sub-light guide part SLGP, to prevent the light emitted from the third and fourth light source blocks LS3 and LS4 from being incident to the main light guide part MLGP directly.

A transparent sheet TF is further disposed between the main light guide part MLGP and the sub-light guide part SLGP. The transparent sheet TF is disposed under the main light guide part MLGP in which the main light guide part MLGP and the sub-light guide part SLGP overlap with each other. The first reflective sheet RF1 is disposed under the main light guide part MLGP in which the sub-light guide part SLGP is not disposed. The transparent sheet TF is disposed on the same plane as the first reflective sheet RF1, and the area in which the transparent sheet TF and the first reflective sheet RF1 are disposed is substantially the same as the area in which the main light guide part MLGP is disposed.

In addition, the transparent sheet TF may be integrally formed with the first reflective sheet RF1. In this case, the portion of the first reflective sheet RF1 may be coated or laminated with a reflective material.

The main light guide part MLGP and the sub-light guide part SLGP are spaced apart from each other by a thickness of the first reflective sheet RF1, and thus the transparent sheet TF has a thickness corresponding to the thickness of the first reflective sheet RF1.

The transparent sheet TF has a refractive index similar to or equal to a refractive index of the main light guide part MLGP and the sub-light guide part SLGP. In this case, the loss of the light that travels to the main light guide part MLGP from the sub-light guide part SLGP may be reduced.

The transparent sheet TF may be formed of the same material as the main light guide part MLGP and the sub-light guide part SLGP. In addition, the transparent sheet TF may be formed from a different material from the main light guide part MLGP and the sub-light guide part SLGP as long as the different material has the refractive index similar to or equal to that of the main light guide part MLGP and the sub-light guide part SLGP. For instance, the transparent sheet TF may be formed of one or more of an acetate-based resin of triacetylcellulose (TAC), a polyester-based resin of polyethylene terephthalate (PET), polyethylene naphthalate (PEN), etc., a polysulfone-based resin, a polycarbonate-based resin, a polyamide-based resin, a polyimide-based resin, a polyolefin-based resin, an acrylic-based resin, a polynorbornene-based resin, a cellulose-based resin, a polyarylate-based resin, a polystylene-based resin, a polyvinylalcohol-based resin, polyvinyl chloride-based resin, a polyvinylidene chloride-based resin, and a polyacrylic-based resin, etc.The bottom chassis BC is disposed under the backlight unit BLU to accommodate the parts of the backlight unit BLU. The bottom chassis BC includes a bottom portion substantially in parallel to a rear surface of the first and the second reflective sheets RF1 and RF2 and a sidewall portion extending upward from the bottom portion. The backlight unit BLU is accommodated in a space defined by the bottom portion and the sidewall portion. The bottom portion has curved portions in accordance with a rear shape of the main light guide part MLGP and the sub-light guide part SLGP. In this case, the printed circuit board PCB may be provided to the outer surface of the bottom chassis BC in the area the sub-light guide part SLGP is not disposed. Accordingly, parts such as the printed circuit board PCB may be compactly assembled with the display device without increasing in a total volume of the display device.

The top chassis TC is disposed on the display panel PNL. The top chassis TC supports the front edge of the display panel PNL and covers a side surface of the mold frame MF or a side surface of the bottom chassis BC. The top chassis TC is provided with a display window WD formed therethrough to expose the display area DA of the display panel PNL.

Hereinafter, the light source part and the light guide part of the backlight unit BLU will be described in detail.

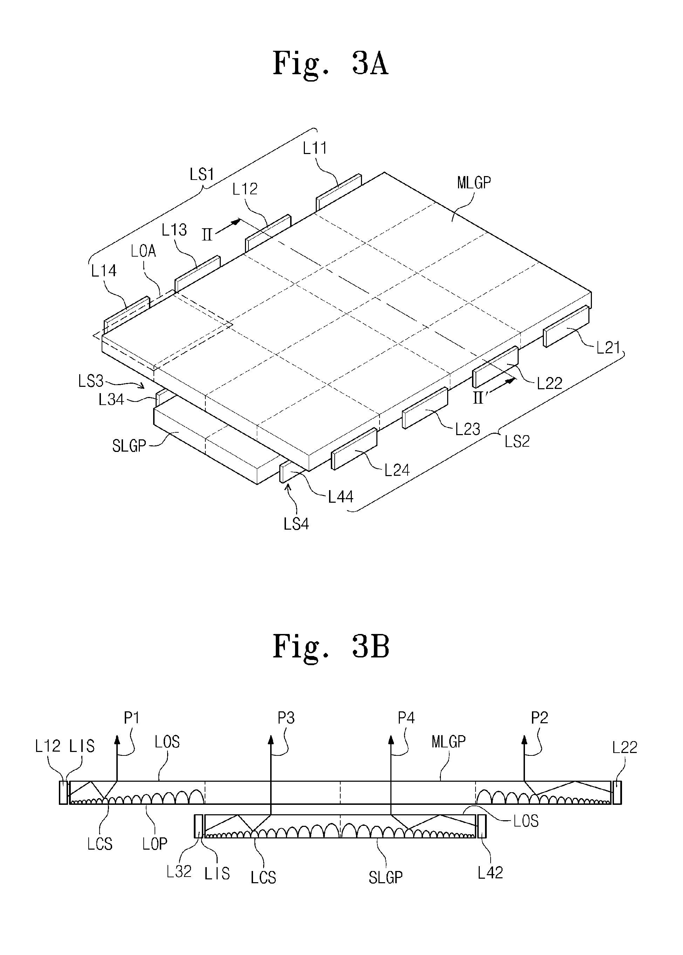

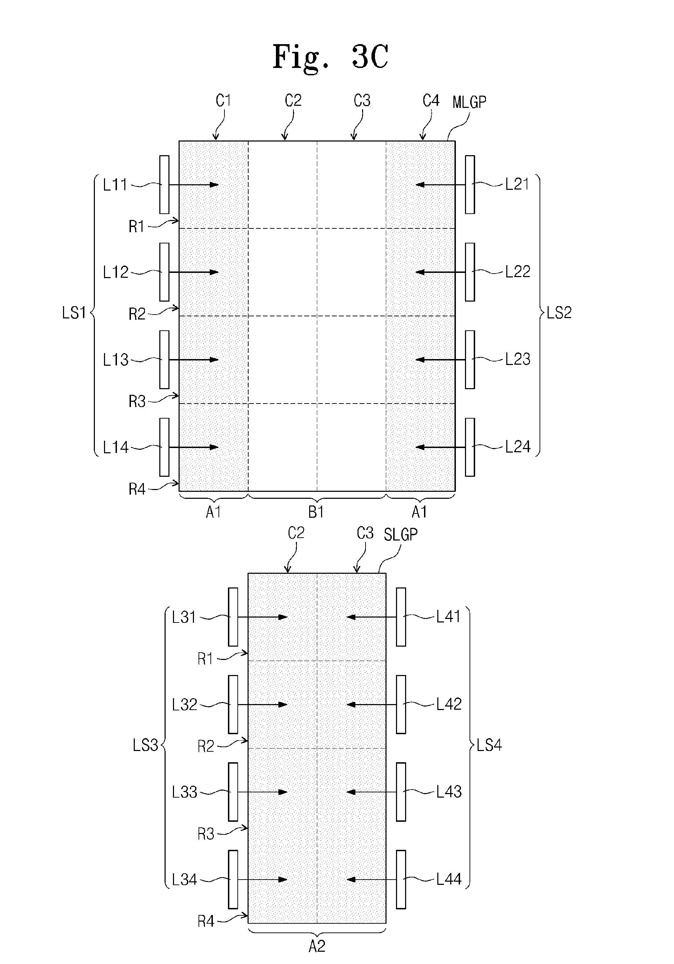

FIG. 3A is a perspective view showing a light source part and a light guide part of the display device according to the first exemplary embodiment of the present invention, FIG. 3B is a cross-sectional view taken along a line II-II' of FIG. 3A, and FIG. 3C is a plan view showing the light source part and the light guide part shown in FIG. 3A. For the convenience of explanation, FIGS. 3A to 3C show the main light guide part MLGP, the sub-light guide part SLGP, and the light source part disposed on the same plane. Since the portion of the main light guide part MLGP and the sub-light guide part SLGP overlap with each other, the overlapped row and column are assigned with the same reference numerals.

Referring to FIGS. 3A, 3B, and 3C, the backlight unit BLU according to the first exemplary embodiment includes the light source part to provide the light to the display panel PNL and the light guide plate to guide the light to the display panel PNL.

The light guide plate includes the main light guide part MLGP and the sub-light guide part SLGP having a size smaller than that of the main light guide part MLGP. When viewed from the top, the main light guide part MLGP and the sub-light guide part SLGP overlap with each other. The light guide plate includes a plurality of light emitting areas LOA when viewed from the top. The light emitting areas LOA are arranged in a matrix form and provide the light to the display area DA of the display panel PNL. FIGS. 3A to 3C show the light emitting areas LOA arranged in M rows by N columns, and each of M and N is four. Hereinafter, since the main light guide part MLGP and the sub-light guide part SLGP are disposed to correspond to the light emitting areas LOA, a position of specific areas (light exit areas and/or transmission areas) will be described with reference to the rows and the columns of the light emitting areas LOA in the plan view.

Each of the main light guide part MLGP and the sub-light guide part SLGP includes a light incident surface LIS adjacent to the light source part, into which the light is incident, a light exit surface LOS connected to the light incident surface LIS, from which the light exits, and an opposite surface LCS connected to the light incident surface LIS and opposite to the light exit surface LOS. The light incident surface LIS faces the light source part and the light emitted from the light source part is incident to the light source part.

To improve incident efficiency of the light emitted from the light source part, an incident pattern may be disposed on the light incident surface LIS. The incident pattern may be protruded from or recessed into the light incident surface LIS.

The light incident into the light incident surface LIS are reflected in the main light guide part MLGP or the sub-light guide part SLGP while traveling through the main light guide part MLGP or the sub-light guide part SLGP and exits upward from the light exit surface LOS to the display panel PNL. Here, in the case that the light source part is configured to include the plural light source blocks, the light incident surface LIS is provided in a plural number to respectively correspond to the light source blocks.

The main light guide part MLGP includes a plurality of light exit areas A1 and a plurality of transmission areas B1 in the area corresponding to the display area of the display panel PNL. The light exit areas A1 include a light exit pattern LOP to guide the light provided from the light source part to the display panel PNL. The light exit pattern LOP changes
the path of the light traveling through the main light guide part MLGP to allow the light to be provided to the light exit surface LOS corresponding to the area in which the light exit pattern LOP is formed. The light exit pattern LOP is disposed on the opposite surface LCS of the main light guide part MLGP. The light incident into the main light guide part MLGP from the light source part travels toward the display panel PNL by the light exit pattern LOP, but it should not be limited thereto or thereby. That is, the light exit pattern LOP may be formed on the light exit surface LOS.

The transmission areas B1, in which the light exit pattern LOP is not disposed, transmit the light from the sub-light guiding part SLGP to the display panel PNL and reflect the light traveling in a direction substantially in parallel with or having an incident angle less than a critical angle to the light exit surface LOP.

The sub-light guide part SLGP overlaps with a portion of the light emitting areas LOA. The sub-light guide part SLGP includes light exit areas A2 corresponding to the transmission areas B1 of the main light guide part MLGP and does not include a transmission areas.

The light source part is disposed at both sides of each of the main light guide part MLGP and the sub-light guide part SLGP. In detail, the first and the second light source blocks LS1 and LS2 are disposed at both sides of the main light guide part MLGP in the row direction to face each other while interposing the main light guide part MLGP therebetween. The third and the fourth light source blocks LS3 and LS4 are disposed at both sides of the sub-light guide part SLGP in the row direction to face each other while interposing the sub-light guide part SLGP therebetween. Both of the third and the fourth light source blocks LS3 and LS4 extends in the column direction similar as the first and the second light source blocks LS1 and LS2.

The first to the fourth light source blocks LS1 to LS4 extend in the column direction, and each of the first to the fourth light source blocks LS2 to LS4 includes M light sources (M=4) in each column. That is, the first light source block LS1 includes the light sources L11, L12, L13, and L14, the second light source block LS2 includes the light sources L21, L22, L23, and L24, the third light source block LS3 includes the light sources L31, L32, L33, and L34, and the fourth light source block LS4 includes the light sources L41, L42, L43, and L44. The light sources L11, L12, L13, and L14 of the first light source block LS1 correspond to the light emitting areas disposed in the first, second, third, and fourth rows R1, R2, R3, and R4 of the first column C1. The light sources L21, L22, L23, and L24 of the second light source block LS2 correspond to the light emitting areas disposed in the first, second, third, and fourth rows R1, R2, R3, and R4 of the first column C4. The light sources L31, L32, L33, and L34 of the third light source block LS3 correspond to the light emitting areas disposed in the first, second, third, and fourth rows R1, R2, R3, and R4 of the first column C2. The light sources L41, L42, L43, and L44 of the fourth light source block LS4 correspond to the light emitting areas disposed in the first, second, third, and fourth rows R1, R2, R3, and R4 of the first column C4. Hereinafter, the reference numeral used for each light source indicates the block number of the light source block, in which the light source is included, and the row number of the light source. For instance, in the case that the reference numeral used for the light is L23, the reference numeral indicates the light source disposed in the third row R3 of the second light source block LS2. Here, each light source includes one light source, but it should not be limited thereto or thereby. That is, each light source may be a light source group including n (n is a natural number) light sources.

In the sub-light guide part SLGP, the light exit areas A2 indicates the area in which the light exit pattern LOP is formed. Hereinafter, the light exit areas A1 of the main light guide part MLGP are referred to as first light exit areas A1 and the light exit areas A2 of the sub-light guide part SLGP are referred to as second light exit areas A2 so as to distinguish the light exit areas A1 from the light exit areas A2 of the sub-light guide part SLGP.

Similar to the first light exit areas A1, the second light exit areas A2 are disposed in corresponding columns in accordance with the arrangement of the light source part. In the first exemplary embodiment, the light source part includes the third light source block LS3 and the fourth light source block LS4 arranged in the column direction with respect to the sub-light guide part SLGP, and the second light exit areas A2 include two columns, i.e., one column corresponding to the third light source block LS3 and the other one corresponding to the fourth light source block LS4. Accordingly, in the light emitting areas LOA, the areas in which the light exit pattern LOP of the main light guide part MLGP is formed are not overlapped with the areas in which the light exit pattern LOP of the sub-light guide part SLGP is formed. As a result, since the first light exit areas A1 and the second light exit areas A2 are not overlapped with each other, the light exit pattern LOP is formed over the whole surface of the light guide part when the user watches the light guide part at the side of the display panel PNL. A sum of areas of the light guide part, in which the light exit pattern LOP is formed, is equal to a total area of the light guide part corresponding to the display area DA of the display panel PNL. As shown in FIGS. 3A to 3C, when the main light guide part MLGP includes four rows R1, R2, R3, and R4 and four columns C1, C2, C3, and C4, the sub-light guide part SLGP includes four rows R1, R2, R3, and R4 and two columns C2 and C3. In the main light guide part MLGP, the first light emitting areas A1 corresponds to the light emitting areas LOA in the first and the fourth columns C1 and C4 and the transmission areas B1 corresponds to the light emitting areas LOA in the second and the third columns C2 and C3. In the sub-light guide part SLGP, the second light exit areas A2 correspond to the light emitting areas LOA of the second and the third columns C2 and C3 corresponding to the transmission areas B1 among the light emitting areas LOA.

In the first exemplary embodiment, the first reflective sheet RF1 is disposed under the first light exit areas A1 and the second reflective sheet RF2 is disposed under the second light exit areas A2. The first reflective sheet RF1 may be a double-sided reflective sheet and the second reflective sheet RF2 may be a single-sided reflective sheet. When viewed from the top, the third and the fourth light source blocks LS3 and LS4 are disposed in the first light exit area A1 among the light emitting areas LOA. However, since the first reflective sheet RF1 is disposed under the first light exit area A1 as shown in FIGS. 1 and 2, the light emitted from the third and the fourth light source blocks LS3 and LS4 travels only to the second light exit area A2 after being reflected by the first reflective sheet RF1. As a result, although the light is emitted from the third and the fourth light source blocks LS3 and LS4, the light does not directly travel to the first light exit area A1 disposed right above the third and fourth light source blocks LS3 and LS4.

In the backlight unit having the above-mentioned structure, the path of the light traveling through the light source part and the light guide part will be described with reference to FIGS. 3B and 3C.

A first light P1 emitted from the first light source block LS1 is incident into the main light guide part MLGP through the light incident surface LIS of the main light guide part MLGP. The traveling path of the first light P1 is changed in the closest area among the light exit areas A1 of the main light guide part MLGP, i.e., the light emitting areas LOA of the first column C1, by the light exit pattern LOP and the first reflective sheet RF1, and thus the first light P1 travels toward the display panel PNL. Thus, the first light P1 travels to the display panel PNL through the light exit surface LOS of the main light guide part MLGP.

The second light P2 emitted from the second light source block LS2 is incident into the main light guide part MLGP through the light incident surface LIS of the main light guide part MLGP. The traveling path of the second light P2 is changed in the closest area among the light exit areas A1 of the main light guide part MLGP, i.e., the light emitting areas LOA of the fourth column C4, by the light exit pattern LOP and the first reflective sheet RF1, and thus the second light P2 travels toward the display panel PNL. Thus, the second light P2 travels to the display panel PNL through the light exit surface LOS of the main light guide part MLGP.

The third light P3 emitted from the third light source block LS3 is incident into the sub-light guide part SLGP through the light incident surface LIS of the sub-light guide part SLGP. The traveling path of the third light P3 is changed in the closest area among the light exit areas A2 of the sub-light guide part SLGP, i.e., the light emitting areas LOA of the second column C2, by the light exit pattern LOP and the second reflective sheet RF2, and thus the third light P3 travels to the transmission areas B1 of the main light guide part MLGP, e.g., the light emitting areas LOA of the second column C2, through the light exit surface LOS of the sub-light guide part SLGP. In this case, since the third light P3 travels in the direction substantially vertical to the light exit surface LOS of the sub-light guide part SLGP, the opposite surface LCS of the main light guide part MLGP, and the light exit surface LOS of the main light guide part MLGP, the third light P3 transmits through the main light guide part MLGP without being reflected in the main light guide part MLGP. As a result, the third light P3 is provided to the display panel PNL.

The fourth light P4 emitted from the fourth light source block LS4 is incident into the sub-light guide part SLGP through the light incident surface LIS of the sub-light guide part SLGP. The traveling path of the fourth light P4 is changed in the closest area among the light exit areas A2 of the sub-light guide part SLGP, i.e., the light emitting areas LOA of the third column C3, by the light exit pattern LOP and the second reflective sheet RF2, and thus the fourth light P4 travels to the transmission areas B1 of the main light guide part MLGP, e.g., the light emitting areas LOA of the third column C2, through the light exit surface LOS of the sub-light guide part SLGP. Since the fourth light P4 travels in the direction substantially vertical to the light exit surface LOS of the sub-light guide part SLGP, the opposite surface LCS of the main light guide part MLGP, and the light exit surface LOS of the main light guide part MLGP, the fourth light P4 transmits through the main light guide part MLGP without being reflected in the main light guide part MLGP. As a result, the fourth light P4 is provided to the display panel PNL.

Here, the light sources of the first to the fourth light source blocks LS1 to LS4 correspond to the light emitting areas LOA arranged in corresponding rows in an one-to-one correspondence. That is, as shown in FIG. 3B, the first light P1 emitted from the light source corresponding to the second row R2 of the first light source block LS1 travels to the display panel PNL in the light emitting area LOA of the first column C1 by the second row R2, the second light P2 emitted from the light source corresponding to the second row R2 of the second light source block LS2 travels to the display panel PNL in the light emitting area LOA of the fourth column C4 by the second row R2, the third light P3 emitted from the light source corresponding to the second row R2 of the third light source block LS3 travels to the display panel PNL in the light emitting area LOA of the second column C2 by the second row R2, and the fourth light P4 emitted from the light source corresponding to the second row R2 of the fourth light source block LS4 travels to the display panel PNL in the light emitting area LOA of the third column C3 by the second row R2. The light emitted from each light source has been represented by an arrow as shown in FIG. 3C. The light travels toward the display panel PNL in the light emitting area LOA at which the arrow is pointed. As an example, the light emitted from the light source corresponding to the fourth row R4 of the fourth light source block LS4 is emitted from the light emitting area LOA arranged in the third column C3 by the fourth row R4 of the sub-light guide part SLGP.

In addition, in the present exemplary embodiment, the light exit areas are arranged in the columns of the light source part to be substantially parallel to the direction in which the light source part is provided, but they should not be limited thereto or thereby. For instance, when the light source part is arranged in the row direction, the light exit areas area arranged in the row direction. Thus, according to embodiments, the row or column direction is changed in accordance with the arrangement of the light source blocks, the main light guide part MLGP, and the sub-light guide part SLGP.

According to the present exemplary embodiment, the first and the second light source blocks LS1 and LS2 are disposed at both sides of the main light guide part MLGP and the third and the fourth light source blocks LS3 and LS4 are disposed at both sides of the sub-light guide part SLGP, and thus the first to the fourth light source blocks LS1 to LS4 are spaced apart from each other. Accordingly, heat generated from the first to the fourth light source blocks LS1 to LS4 is uniformly distributed without being concentrated in one place. As a result, malfunction or defect of the backlight unit, which is caused by overheat, may be prevented. In addition, since the sub-light guide part SLGP has the size smaller than that of the main light guide part MLGP, the material used to manufacture the light guide plate may be reduced. Further, since the sub-light guide part SLGP has the size smaller than that of the main light guide part MLGP, a space occurs under the main light guide part MLGP, where the sub-light guide part SLGP is not formed, and the printed circuit board PCB that drives the display panel PNL may be accommodated in the space.

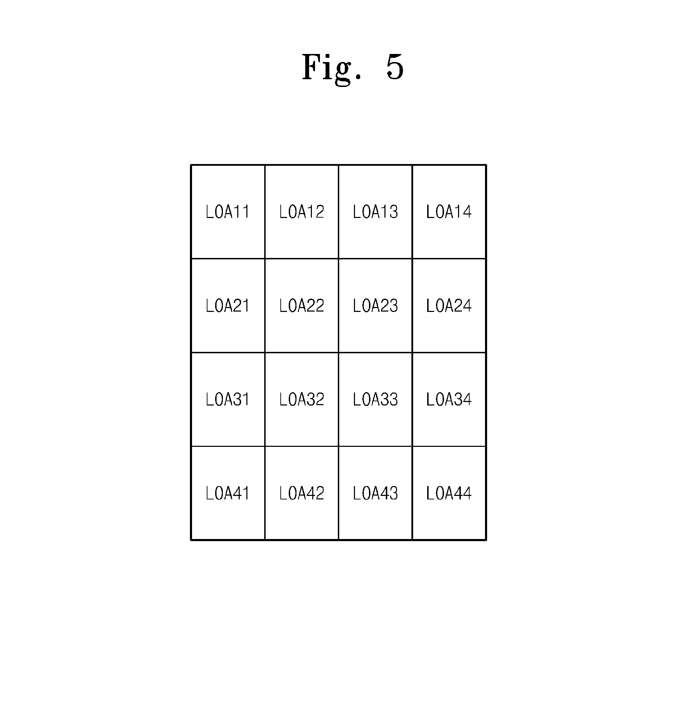

As described above, the light source part includes the first to the fourth light source blocks and each of the first to the fourth light sources includes the light sources or the light source groups. The first to the fourth light source blocks respectively correspond to the light emitting areas in one column, and each light source (or each light source group) of each light source block corresponds to one of the light emitting areas. Since on and off operations of each light source are independently operated, the amount of the light emitted from the light emitting areas may be controlled in accordance with the on and off operations of each light source. That is, a two-dimensional local dimming method may be applied to the backlight unit. Hereinafter, the two-dimensional local dimming method will be described with reference to FIGS. 4 and 5.

FIG. 4 is a block diagram showing a display device according to an exemplary embodiment of the present invention and FIG. 5 is a plan view showing a plurality of light emitting areas according to an exemplary embodiment of the present invention.

Referring to FIGS. 4 and 5, the display device includes the display panel PNL, a data driver 40 that drives data lines DL, a gate driver 30 that drives gate lines GL, a timing controller 20 that controls the data driver 40 and the gate driver 30, the light source part 60 that provides the light to the display panel PNL, and the light source control unit 50 that drives the light source part 60. The light source control unit 50 analyzes the image and controls the light source part 60 on the basis of the analyzed image.

The display panel PNL includes a plurality of pixels arranged in a matrix form. Each pixel includes a thin film transistor Tr, a liquid crystal capacitor C_{LC}, and a storage capacitor C_{ST}. The thin film transistor Tr includes a gate electrode connected to a corresponding gate line of the gate lines GL, a source electrode connected to a corresponding data line of the data lines DL, and a drain electrode connected to the liquid crystal capacitor C_{LC} and the storage capacitor C_{ST}.

The data driver 40 latches a digital video data RGB provided from the timing controller 20. The data driver 40 converts the digital video data RGB into positive/negative analog data voltages using positive/negative gamma compensation voltages and applies the positive/negative analog data voltages to the data lines DL.

The gate driver 30 includes a shift register, a level shifter controlling output signals from the shift register to have a swing width appropriate to the drive of the thin film transistor Tr of the pixel, and an output buffer. The gate driver 30 is configured to include a plurality of gate driver integrated circuits to sequentially apply gate signals each having a pulse width of one horizontal period to the gate lines GL.

The timing controller 20 receives the digital video data RGB and timing signals Vsync, Hsync, DE, and DCLK from a system board mounted with an external video source thereon and applies the digital video data RGB to the data driver 40. The timing controller 20 generates a source timing control signal DDC and a gate timing control signal GDC on the basis of the timing signals Vsync, Hsync, DE, and DCLK from the system board so as to control an operation timing of the data driver 40 and the gate driver 30. The timing controller 20 inserts an interpolation frame between frames of an input image signal, which is input at a frame frequency of about 60Hz and multiplies the source timing control signal DDC and the gate timing control signal GDC, and thus the timing controller 20 controls the operation of the data driver 40 and the gate driver 30 at the frame frequency at 60×N (N is a positive integer equal to or greater than 2) Hz.

When the gate signals are sequentially applied to the gate lines GL, the data signals are applied to the data lines DL. In detail, when a corresponding gate signal is applied to a selected gate line, the thin film transistor Tr connected to the selected gate line is turned on in response to the corresponding gate signal. When the data signal is applied to the data line DL connected to the turned-on thin film transistor Tr, the data signal is charged in the liquid crystal capacitor C_{LC} and the storage capacitor C_{ST} through the turned-on thin film transistor Tr. The liquid crystal capacitor C_{LC} controls a light transmittance of the liquid crystal molecules of the liquid crystal layer in accordance with the voltage charged therein. The storage capacitor C_{ST} charges the voltage corresponding to the data signal while the thin film transistor Tr is turned on and applies the charges voltage to the liquid crystal capacitor C_{LC} while the thin film transistor Tr is turned off, thereby maintaining the charge of the liquid crystal capacitor C_{LC}. Thus, the display panel PNL displays an image.

The light sources of the light source part 60 independently receive the current by the light source control unit 50, and thus the amount of the light emitted from each light source of the light source part 60 is independently controlled.

The light source control unit 50 controls the current provided to each light source of the first to the fourth light source blocks to be different from each other. The light source control unit 50 analyzes the digital video data RGB provided from the system board, maps the input image to the light emitting areas LOA11 to LOA44 shown in FIG. 5, and analyzes the brightness of the input image in the unit of the light emitting areas LOA11 to LOA44by using an image analysis scheme, e.g., a histogram analysis scheme. The light source control unit 50 controls the brightness of the light emitted from each light source of the first to the fourth light source blocks in response to the local dimming signal to control the current provided to the light sources on the basis of the analyzed brightness in the lighr emitting areas LOA11 to LOA44. In this case, the light source control unit 50 is synchronized with the timing controller 20 in response to the timing signals Vsync, Hsync, DE, and DCLK. The light source control unit 50 is mounted on the system board or built in the timing controller 20.

In addition, responsive to the local dimming signal, the light source control unit 50 controls the current provided to the light source corresponding to the relatively bright light emitting area in the image displayed on the display panel PNL to be high. On the contrary, the light source control unit 50 controls the current provided to the light source corresponding to the relatively dark light emitting area in the image displayed on the display panel PNL to be low. Accordingly, the local dimming, in which the intensity of the light emitted from each light source is controlled in accordance with the image in each light emitting area, is realized.

In the present exemplary embodiment, since the light source part is disposed at both sides of each of the main light guide part MLGP and the sub-light guide part SLGP, the number of the light emitting areas LOA of the display area is much more than that when the light source part is disposed at one side of each of the main light guide part MLGP and the sub-light guide part SLGP. In addition, the number of the light sources of the light source part disposed at both sides of each of the main light guide part MLGP and the sub-light guide part SLGP may be adjusted, and thus the light emitting areas LOA may be formed to have various shapes and sizes.

As a result, the brightness of the light provided to each light emitting area is controlled in detail in accordance with the image displayed in the display device, so that a contrast ratio of the display device is improved. In addition, the ON/OFF of each light source is controlled according to the image of the display device, thereby reducing the power consumption of the display device.

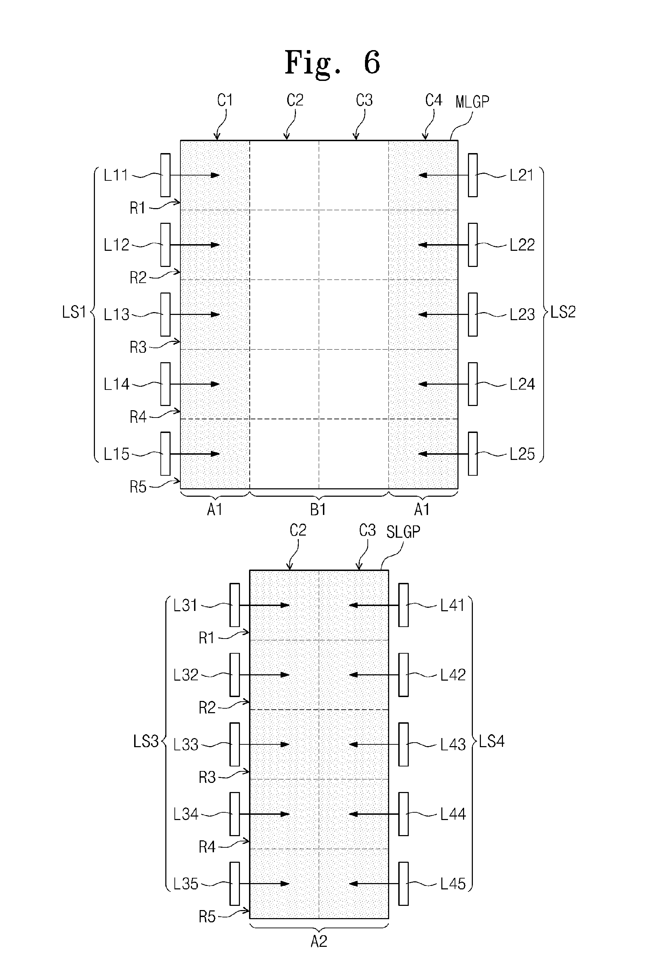

FIG. 6 is a plan view showing a backlight unit according to a second exemplary embodiment of the present invention. For the convenience of explanation, FIG. 6 shows the main light guide part MLGP, the sub-light guide part SLGP, and the light guide plate disposed on the same plane. The backlight unit according to the second exemplary embodiment includes light emitting areas LOA arranged in five rows by four columns.

In exemplary embodiments to be described hereinafter, the same and similar reference numerals denote the same and similar elements in the first exemplary embodiment, and thus detailed descriptions of the same and similar elements will be omitted.

Referring to FIG. 6, the backlight unit has the same configuration and function as those of the backlight unit described in the first exemplary embodiment except for the number of the light sources included in each light source block. This is because only the number of the light sources is changed when compared to that of the first exemplary embodiment. That is, each of the first light source block LS1, the second light source block LS2, the third light source block LS3, and the fourth light source block LS4 includes five light sources. In the main light guide part MLGP, the area in which the light exit pattern LOP is formed corresponds to the first and the fourth columns C1 and C4 among the light emitting areas LOA as described in the first exemplary embodiment, and in the sub-light guide part SLGP, the area in which the light exit pattern LOP is formed corresponds to the second and the fourth columns C2 and C4 among the light emitting areas LOA as described in the first exemplary embodiment.

According to the second exemplary embodiment, since the number of the light sources of each light source block is increased, the number of the light emitting areas LOA is increased. Thus, the local dimming may be controlled in detail in the display area.

As described above, the number of the light sources or the number of the light source groups is adjusted so as to change the number of the rows is changed, but it should not be limited thereto or thereby. That is, according to embodiments, the number of the columns may be changed by adjusting the number of the sub-light guide part.

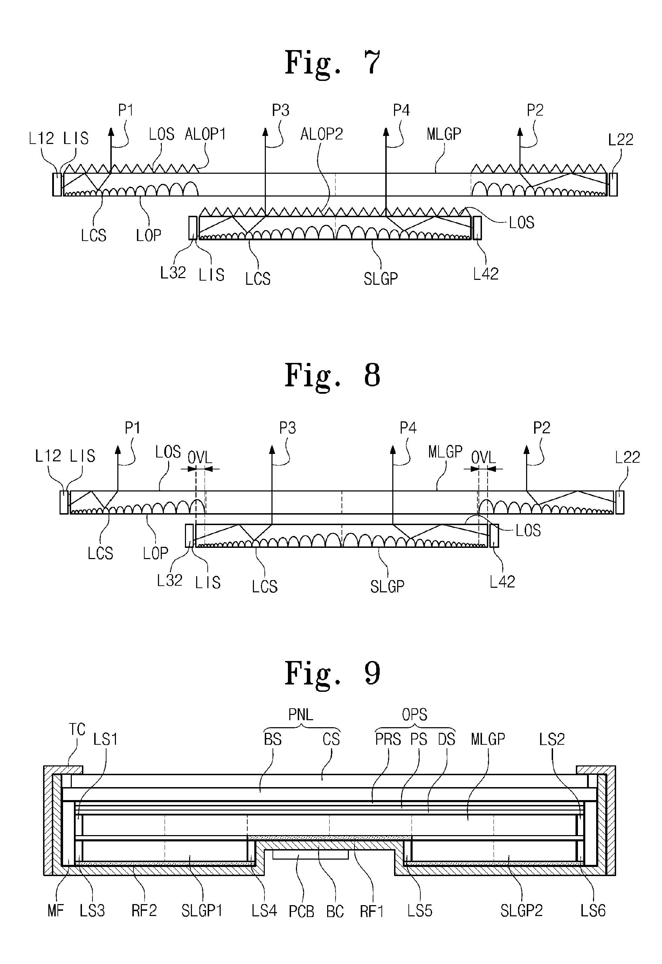

FIG. 7 is a cross-sectional view showing a backlight unit according to a third exemplary embodiment of the present invention, which is taken along the line II-II' of FIG. 3A.

Referring to FIGS. 3A to 3C and 7, the backlight unit according to the third exemplary embodiment has the same configuration and structure as those of the backlight unit described in the first exemplary embodiment except that additional light exit pattern is formed on the main light guide part MLGP and the sub-light guide part SLGP. In detail, a first additional light exit pattern ALOP1 is disposed on the light exit surface LOS corresponding to the first light exit areas A1 of the main light guide part MLGP and a second additional light exit pattern ALOP2 is disposed on the light exit surface LOS corresponding to the second light exit areas A2 of the sub-light guide part SLGP. The first and the second additional light exit patterns ALOP1 and ALOP2 control an angle of the light incident into the main light guide part MLGP and the sub-light guide part SLGP through the side surface of the main light guide part MLGP and the sub-light guide part SLGP to allow the light to vertically travel to the display panel PNL with respect to the lower surface of the display panel PNL through the first and the second light exit areas A1 and A2. The first and the second additional light exit patterns ALOP1 and ALOP2 are available in a convex or a concave pattern and have various shapes, e.g., a triangular shape, a semi-circular shape, an oval shape, etc., in the cross-sectional view. In the third exemplary embodiment, the first and the second additional light exit patterns ALOP1 and ALOP2 are protruded from the light exit surfaces LOS and have the triangular shape, e.g., a prism shape, in the cross-sectional view. The first and the second additional light exit patterns ALOP1 and ALOP2 are not disposed in the transmission areas B1.

FIG. 8 is a cross-sectional view showing a backlight unit according to a fourth exemplary embodiment of the present invention, which is taken along the lint II-II' of FIG. 3A.

Referring to FIGS. 3A to 3C and 8, the backlight unit according to the third exemplary embodiment has the same configuration and structure as those of the backlight unit described in the first exemplary embodiment except that a portion of the light exit areas of the main light guide part MLGP is overlapped with a portion of light exit areas of the sub-light guide part SLGP when viewed from the top. In detail, when viewed from the top, the portion of the light exit patterns LOP disposed in the first light exit areas A1 of the main light guide part MLGP is overlapped with the portion of the light exit patterns LOP disposed in the second light exit patterns A2 of the sub-light guide part SLGP. Namely, the sub-light guide part SLGP is partially overlapped with the first exit area A1, thereby some of the light exit pattern LOP on the first area A1 is overlapped with some of the light exit pattern LOP on the second area A2 in a peripheral area of the sub-light guide part SLGP when viewed in a plan view. In Fig. 8, an overlap region OVL of the light exit pattern LOP on the first area A1 and the light exit pattern LOP on the second area A2 extends along at least one side of the sub-light guide part SLGP. When the overlap region OVL is provided in plural, e.g., provided on the both sides of the sub-light guide part SLGP, each overlap region may have a different area.

The overlap of the light exit patterns LOP is formed by extending the portion of the light exit patterns LOP of the main light guide part MLGP to the transmission areas B1 or the portion of the second light exit areas A2 of the sub-light guide part SLGP to the lower portion of the first light exit areas A1 of the main light guide part MLGP.

As described above, when the first light exit areas A1 are partially overlapped with the second light exit areas A2, the third and the fourth light source blocks LS3 and LS4, which provide the light to the second light exit areas A2, may be prevented from being recognized by the user.

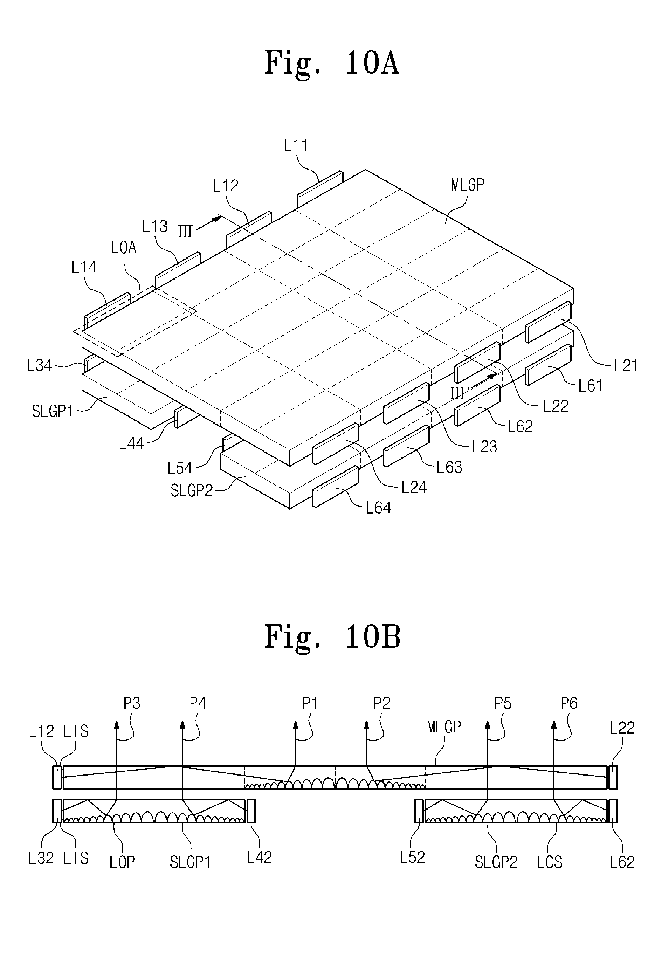

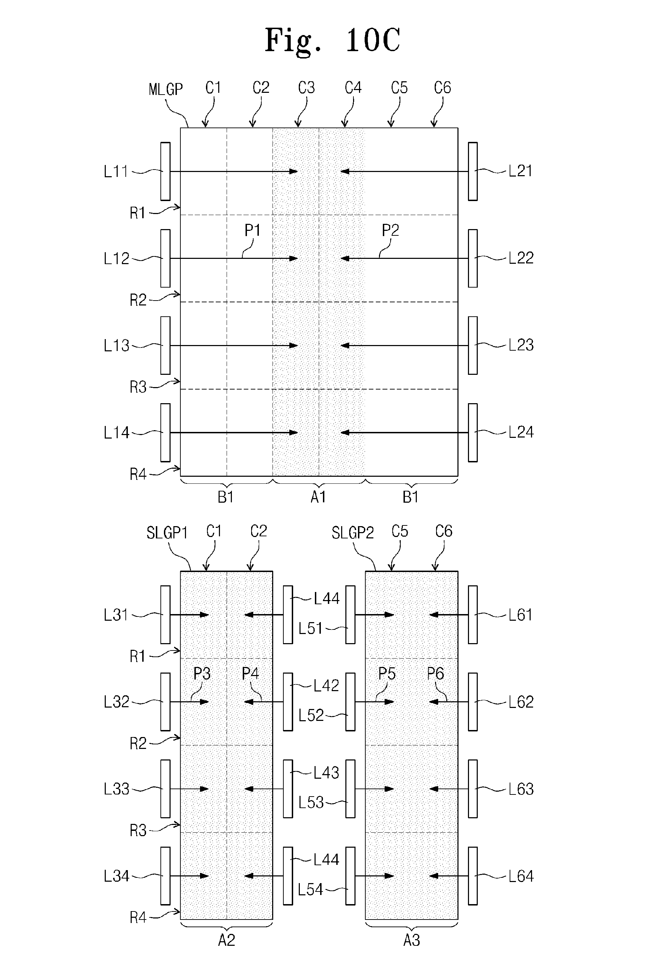

FIG. 9 is a cross-sectional view taken along the line I-I' of FIG. 1 in a display device according to a fifth exemplary embodiment of the present invention, FIG. 10A is a perspective view showing a light source part and a light guide part of the display device according to the fifth exemplary embodiment of the present invention, FIG. 10B is a cross-sectional view taken along a line III-III' of FIG. 10A, and FIG. 10C is a plan view showing the light source part and the light guide part of FIG. 10A. For the convenience of explanation, FIGS. 10A to 10C show the main light guide part MLGP, the sub-light guide part SLGP, and the light source part disposed on the same plane. Since the portion of the main light guide part MLGP is overlapped with the sub-light guide part SLGP to be disposed in the same row and column when viewed from the top, the overlapped row and column are assigned with the same reference numerals.

Referring to FIG. 9, the display device includes a display panel PNL, a backlight unit, and a top chassis TC.

The display panel PNL displays the image. The display panel PNL has a rectangular plate shape with two pairs of sides meeting at right angles, and one of the two pairs of sides is longer than the other.

The backlight unit is disposed under the display panel PNL to provide light to the display panel PNL. The backlight unit includes a mold frame MF to support the display panel PNL, a light source part including a plurality of light sources LS to emit the light, a light guide part to guide the light to the display panel PNL, an optical sheet OPS to improve the efficiency of the light, a reflective sheet RF1 and RF2 to change a direction in which the light travels, and a bottom chassis BC to accommodate the display panel PNL, the mold frame MF, the light source part, the light guide part, the optical sheet OPS, and the reflective sheet RF1 and RF2.

The mold frame MF is provided along an edge of the display panel PNL under the display panel PNL to support the display panel PNL.

The light guide part is disposed under the display panel PNL to guide the light to the display panel PNL. The light guide part includes a main light guide part MLGP disposed under the display panel PNL and having the same size as the display panel PNL and a sub-light guide part SLGP disposed under the main light guide part MLGP and overlapped with a portion of the main light guide part MLGP.

In the fifth exemplary embodiment, the backlight unit includes one main light guide part MLGP and two sub-light guide parts, i.e., a first sub-light guide part SLGP1 and a second sub-light guide part SLGP2. The main light guide part MLGP and the first and the second sub-light guide parts SLGP1 and SLGP2 have a rectangular plate shape when viewed from the top. Each side of the rectangular plate shape is substantially in parallel to any one of the long sides and the short sides of the display panel PNL.

The light source part provides the light to the main light guide part MLGP and the first and the second sub-light guide parts SLGP1 and SLGP2. The light source part includes light source blocks, e.g., first and second light source blocks LS1 and LS2 disposed at both sides of the main light guide part MLGP, third and fourth light source blocks LS3 and LS4 disposed at both sides of the first sub-light guide part SLGP1, and fifth and sixth light source blocks LS5 and LS6 disposed at both sides of the second sub-light guide part SLGP2. Each light source block includes a plurality of light sources and a supporter supporting the light sources.

The optical sheet OPS is disposed between the light guide part and the display panel PNL to control the light emitted from the light source. The optical sheet OPS includes a diffusion sheet DS, a prism sheet PS, and a protective sheet PRS.

The reflective sheet RF1 and RF2 is disposed under the light guide part to reflect the light leaked from the light guide part without being directed to the display panel PNL to allow the light leaked from the light guide part to travel to the display panel PNL. The reflective sheet includes a first reflective sheet RF1 disposed under the main light guide part MLGP and a second reflective sheet RF2 disposed under the first and the second sub-light guide parts SLGP1 and SLGP2. In the present exemplary embodiment, since the first and the second sub-light guide parts SLGP1 and SLGP2 are spaced apart from each other, the second reflective sheet RF2 disposed under the first and the second sub-light guide parts SLGP1 and SLGP2 is divided into two parts spaced apart from each other. The first reflective sheet RF1 and the second reflective sheet RF2 are disposed on the bottom chassis BC to reflect the light. As a result, the amount of the light traveling to the display panel PNL is increased by the first and the second reflective sheets RF1 and RF2. The first reflective sheet RF1 covers the third to the sixth light source blocks LS3 to LS6, which provide the light to the first and the second sub-light guide parts SLGP1 and SLGP2, to prevent the light emitted from the third to the sixth light source blocks LS3 to LS6 from being incident to the display panel PNL directly without passing through the first and the second sub-light guide parts SLGP1 and SLGP2.

A transparent sheet TF is further disposed between the main light guide part MLGP and the first sub-light guide part SLGP1 and between the main light guide part MLGP and the second sub-light guide part SLGP2. The main light guide part MLGP and the first sub-light guide part SLGP1 are spaced apart from each other by a thickness of the first reflective sheet RF1 and the main light guide part MLGP and the second sub-light guide part SLGP2 are spaced apart from each other by the thickness of the first reflective sheet RF1, and thus the transparent sheet TF has a thickness corresponding to the thickness of the first reflective sheet RF1. The transparent sheet TF has a refractive index similar to or equal to a refractive index of the main light guide part MLGP and the first and the second sub-light guide parts SLGP1 and SLGP2. In this case, the loss of the light that travels to the main light guide part MLGP from the first sub-light guide part SLGP1 and/or the second sub-light guide part SLGP2 may be reduced.

The bottom chassis BC is disposed under the backlight unit to accommodate the parts of the backlight unit. The bottom chassis BC includes a bottom portion substantially in parallel to a rear surface of the first and second reflective sheets RF1 and RF2 and a sidewall portion extending\ upward from the bottom portion. The bottom portion has curved portions in accordance with a rear shape of the main light guide part MLGP and the first and second sub-light guide part SLGP1 and SLGP2. The backlight unit is accommodated in the space defined by the bottom portion and the sidewall portion.

The printed circuit board PCB may be disposed on the outer surface of the bottom chassis BC, on which the first and the second sub-light guide parts SLGP1 and SLGP2 are not provided. In the bottom chassis BC, the area in which the first and the second sub-light guide parts SLGP1 and SLGP2 are not disposed is recessed to the main light guide part MLGP when compared to that of the area in which the first and the second sub-light guide parts SLGP1 and SLGP2 are disposed. Accordingly, parts such as the printed circuit board PCB may be compactly assembled with the display device without increasing in a total volume of the display device.

The top chassis TC is disposed on the display panel PNL. The top chassis TC supports the front edge of the display panel PNL and covers a side surface of the mold frame MF or a side surface of the bottom chassis BC.

Hereinafter, the light source part and the light guide part of the backlight unit will be described in detail.

In the fifth exemplary embodiment, the number of the columns of the light emitting areas LOA depends on the number of the sub-light guide parts SLGP. FIGS. 10A to 10C show the light emitting areas LOA arranged in M rows by N columns (M is 4 and N is 6).

Referring to FIGS. 10A to 10C, the backlight unit according to the fifth exemplary embodiment includes the light source part to provide the light to the display panel PNL and the light guide plate to guide the light to the display panel PNL.

The light guide part includes the main light guide part MLGP and the sub-light guide part SLGP, i.e., the first and the second sub-light guide parts SLGP1 and SLGP2 each having a size smaller than that of the main light guide part MLGP. When viewed from the top, the main light guide part MLGP and the first and second sub-light guide parts SLGP1 and SLGP2 are overlapped with each other. Accordingly, when viewed from the display panel PNL, the main light guide part MLGP and the first and second sub-light guide parts SLGP1 and SLGP2 seem to be one light guide plate. The light guide part includes the light emitting areas LOA when viewed from the top. The light emitting areas LOA are arranged in a matrix form and provide the light to the display area DA of the display panel PNL.

The main light guide part MLGP includes a plurality of light exit areas A1 and a plurality of transmission areas B1, which correspond to the light emitting areas LOA.

The first and the second light source blocks LS1 and LS2 are respectively disposed at both sides of the main light guide part MLGP. In detail, the first and the second light source blocks LS1 and LS2 are respectively disposed at both sides of the main light guide part MLGP in the row direction to face each other while interposing the main light guide part MLGP therebetween. Each of the first and the second light source blocks LS1 and LS2 extends in the column direction and includes M light sources corresponding to the columns.

The light exit areas A1 are disposed in the column corresponding to the light source block along a direction substantially in parallel to a direction in which the light source blocks are arranged. In the fifth exemplary embodiment, the light exit areas A1 correspond to the light source block of the third column C3 corresponding to the first light source block LS1 and the light source block of the fourth column C4 corresponding to the second light source block LS2. Areas except for the light exit areas A1 correspond to the transmission areas B1, e.g., the light emitting areas LOA of the first, the second, the fifth, and the sixth columns C1, C2, C5, and C6.

The sub-light guide part SLGP includes the first and the second sub-light guide parts SLGP1 and SLGP2 each having the size smaller than that of the main light guide part MLGP and is disposed under the main light guide part MLGP. The first and the second sub-light guide parts SLGP1 and SLGP2 are overlapped with a portion of the light emitting areas LOA. The first and the second sub-light guide parts SLGP1 and SLGP2 include the light exit areas corresponding to the transmission areas B1 of the main light guide part MLGP which do not include separate transmission areas. In the first and the second sub-light guide parts SLGP1 and SLGP2, the light exit areas includes the same light exit pattern LOP as that of the main light guide part MLGP. Hereinafter, the light exit areas A1 of the main light guide part MLGP are referred to as first light exit areas A1 and the light exit areas of the first and the second sub-light guide parts SLGP1 and SLGP2 are referred to as second and third light exit areas A2 and A3 so as to distinct the light exit areas A1 of the main light guide part MLGP from the light exit areas A2 and A3 of the sub-light guide part SLGP.

Similar to the first light exit areas A1, the second and third light exit areas A2 and A3 are disposed in corresponding columns in accordance with the arrangement of the light source blocks. In the fifth exemplary embodiment, the light source part includes the third light source block LS3 and the fourth light source block LS4 arranged in the column direction with respect to the first sub-light guide part SLGP1, and the second light exit areas A2 include two columns, i.e., one column (e.g., C1) corresponding to the third light source block LS3 and the other one (e.g., C2) corresponding to the fourth light source block LS4. In addition, the light source part includes the fifth light source block LS5 and the sixth light source block LS6 arranged in the column direction with respect to the second sub-light guide part SLGP2, and the third light exit areas A3 include two columns, i.e., one column (e.g., C5) corresponding to the fifth light source block LS5 and the other one (e.g., C6) corresponding to the sixth light source block LS6.

Accordingly, in the light emitting areas LOA, the areas in which the light exit pattern LOP of the main light guide part MLGP is formed are not overlapped with the areas in which the light exit pattern LOP of the sub-light guide part SLGP is formed. As a result, it seems that the light exit pattern LOP is formed over the whole surface of the light guide part when the user watches the light guide part at the side of the display panel PNL. That is, a sum of areas of the light guide part, in which the light exit pattern LOP is formed, is equal to a total area of the light guide part corresponding to the display area DA of the display panel PNL.

In the backlight unit having the above-mentioned structure, the path of the light traveling through the light source part and the light guide part will be described with reference to FIGS. 10B and 10C.

A first light P1 emitted from the first light source block LS1 is incident into the main light guide part MLGP through the light incident surface LIS of the main light guide part MLGP. The traveling path of the first light P1 is changed in the closest area among the light exit areas A1 of the main light guide part MLGP, i.e., the light emitting areas LOA of the third column C3, by the light exit pattern LOP and the first reflective sheet RF1, and thus the first light P1 travels toward the display panel PNL through the light exit surface LOS of the main light guide part MLGP.

The second light P2 emitted from the second light source block LS2 is incident into the main light guide part MLGP through the light incident surface LIS of the main light guide part MLGP. The traveling path of the second light P2 is changed in the light emitting areas LOA of the fourth column C4, by the light exit pattern LOP and the first reflective sheet RF1, and thus the second light P2 travels toward the display panel PNL through the light exit surface LOS of the main light guide part MLGP.

The third light P3 emitted from the third light source block LS3 is incident into the first sub-light guide part SLGP1 through the light incident surface LIS of the first sub-light guide part SLGP1. The traveling path of the third light P3 is changed in the closest area among the light exit areas A2 of the first sub-light guide part SLGP1, i.e., the light emitting areas LOA of the first column C1, by the light exit pattern LOP and the second reflective sheet RF2, and thus the third light P3 travels to the transmission areas B1 of the main light guide part MLGP, e.g., the light emitting areas LOA of the second column C1, through the light exit surface LOS of the first sub-light guide part SLGP1. In this case, since the third light P3 travels in the direction substantially vertical to the light exit surface LOS of the first sub-light guide part SLGP1, the opposite surface LCS of the main light guide part MLGP, and the light exit surface LOS of the main light guide part MLGP, the third light P3 transmits through the main light guide part MLGP without being reflected in the main light guide part MLGP. As a result, the third light P3 is provided to the display panel PNL.

In the same way as the third light P3, the traveling path of the fourth light P4 emitted from the fourth light source block LS4 is changed in the light emitting areas LOA of the second column C2 by the light exit pattern LOP and the second reflective sheet RF2, and thus the fourth light P4 travels to the display panel PNL.

In the same way as the third light P3, the traveling path of the fifth light P5 emitted from the fifth light source block LS5 is changed in the light emitting areas LOA of the fifth column C5 by the light exit pattern LOP and the second reflective sheet RF2, and thus the fifth light P5 travels to the display panel PNL.

In the same way as the third light P3, the traveling path of the sixth light P6 emitted from the sixth light source block LS6 is changed in the light emitting areas LOA of the sixth column C6 by the light exit pattern LOP and the second reflective sheet RF2, and thus the sixth light P6 travels to the display panel PNL.

Here, the light sources of the first to the sixth light source blocks LS1 to LS6 correspond to the light emitting areas LOA arranged in corresponding rows in an one-to-one correspondence. In the plan view shown in FIG. 10C, the light emitted from each light source has been represented by an arrow. The light travels toward the display panel PNL in the light emitting area LOA at which the arrow is pointed. As an example, the light emitted from the light source corresponding to the second row of the fourth light source block LS4 is emitted from the light emitting area LOA arranged in the second column C2 by the second row of the first sub-light guide part SLGP1.

As described above, when the light source part includes the first to the sixth light source blocks, each of the first to the sixth light source blocks correspond to the light emitting areas in one column, and each light source corresponds to one of the light emitting areas LOA. Since ON and OFF operations of each light source are independently operated, the amount of the light emitted from the light emitting areas LOA may be controlled in accordance with the ON and OFF operations of each light source. That is, the two-dimensional local dimming method may be applied to the backlight unit. Here, the light source blocks are disposed at both sides of the main light guide part MLGP, and thus the main light guide part MLGP may drive the light emitting areas of two columns corresponding to the number of the light source blocks. In addition, since the light source blocks are disposed at both sides of each of the first and the second sub-light guide parts, each of the first and the second sub-light guide parts may drive the light emitting areas LOA in the columns two times larger than the number of each of the first and the second sub-light guide parts. That is, in the case that the number of the sub-light guide parts is n, the number of the columns (N) is 2+2n. In the present exemplary embodiment, the light emitting areas LOA corresponding to six columns, e.g., two columns of the main light guide part MLGP, two columns of the first sub-light guide part SLGP1, and two columns of the second sub-light guide part SLGP2, may be controlled.

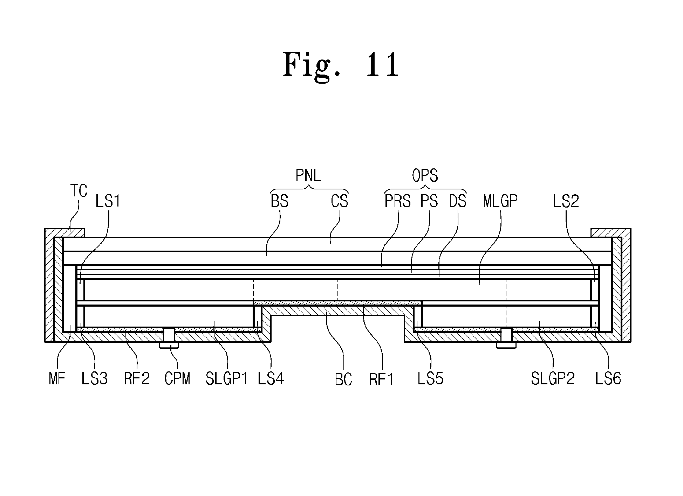

FIG. 11 is a cross-sectional view showing a display device according to a sixth exemplary embodiment to correspond to the line I-I' of FIG. 1. In FIG. 11, the same reference numerals denote the same elements in FIG. 9, and thus detailed descriptions of the same elements will be omitted in order to avoid redundancy.

Referring to FIG. 11, the display device according the sixth exemplary embodiment includes a display panel PNL, a backlight unit, and a top chassis TC.

The backlight unit is disposed under the display panel PNL to provide light to the display panel PNL. The backlight unit includes a mold frame MF to support the display panel PNL, a light source part including a plurality of light sources LS to emit the light, a light guide part to guide the light to the display panel PNL, an optical sheet OPS to improve the efficiency of the light, a reflective sheet RF1 and RF2 to change a direction in which the light travels, a bottom chassis BC disposed under the reflective sheet RF1 and RF2, and a fixing member CPM to fix the light guide part and the bottom chassis BC.

The light guide part includes a main light guide part MLGP and first and second sub-light guide parts SLGP1 and SLGP2 disposed under the main light guide part MLGP.

The bottom chassis BC includes at least one hole formed through the bottom chassis in areas in which the bottom chassis BC is overlapped with the first and the second sub-light guide parts SLGP1 and SLGP2. In addition, the second reflective sheet RF2 disposed between the bottom chassis BC and the first sub-light guide part SLGP1 and between the bottom chassis BC and the second sub-light guide part SLGP2 includes an opening corresponding to the hole formed through the bottom chassis BC.

The fixing member CPM is inserted into the hole and the opening to fix the first and the second sub-light guide parts SLGP1 and SLGP2 to the bottom chassis BC. The first and the second sub-light guide parts SLGP1 and SLGP2 are spaced apart from each other and the position of the first and the second sub-light guide parts SLGP1 and SLGP2 is changed in accordance with the flexibility of the main light guide part MLGP. The fixing member CPM stably fixes and supports the first and the second sub-light guide parts SLGP1 and SLGP2 to the bottom chassis BC

As described above, the structure that uniformly maintains the distance between the light guide part and the bottom chassis BC is required. This structure is accomplished by fixing the light guide part to the bottom chassis BC in the area, which is able to be optically covered, without using an adhesive member, such as a double side adhesive tape. To this end, the hole is formed penetrating through the bottom chassis BC and the reflective sheet RF1 and RF2, and a pin formed of the same material as the mold frame MF is inserted into the hole and directly bonded to one surface of the light guide part using an ultrasonic wave method. Therefore, the light guide part, the reflective sheet RF1 and RF2, and the bottom chassis BC are not separated from each other and distances between them is uniformly maintained.

In the sixth exemplary embodiment, the first and the second sub-light guide parts SLGP1 and SLGP2 are fixed to the bottom chassis BC using the fixing member CPM, but it should not be limited to the fixing member CPM.

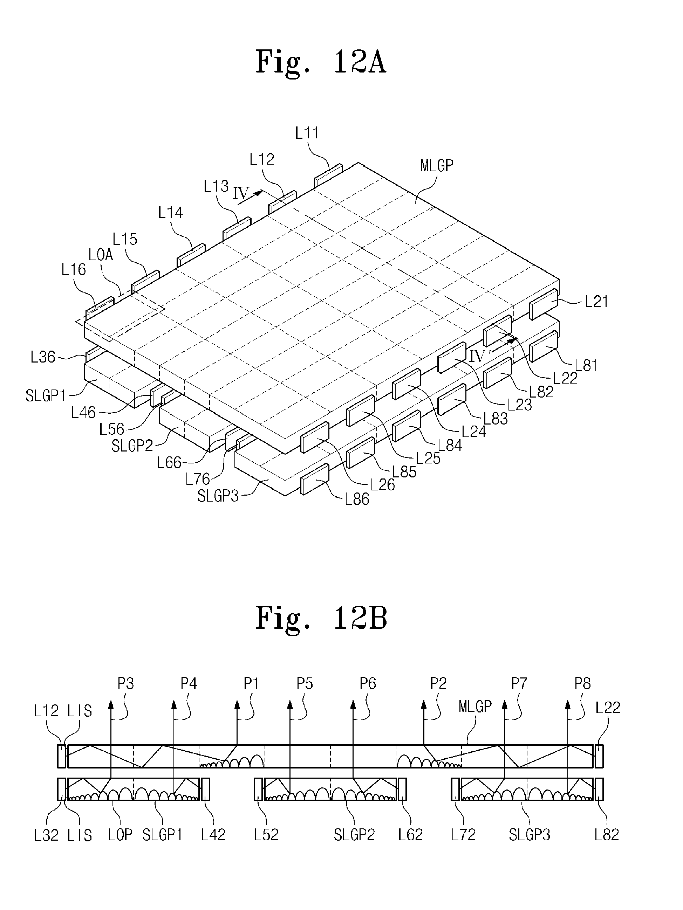

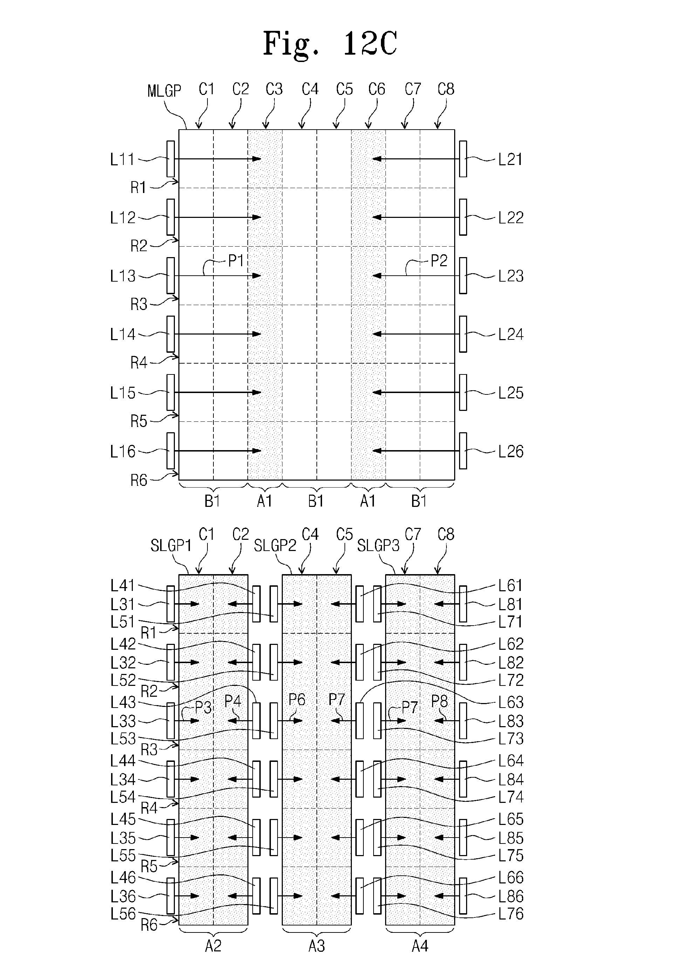

In a seventh exemplary embodiment, the number of the rows and columns of the light emitting areas LOA depends on the number of the light source blocks and the number of the sub-light guide part SLGP. FIGS. 12A, 12B, and 12C shows the light emitting areas LOA arranged in M rows by N columns (e.g., M is 6 and N is 8).

FIG. 12A is a perspective view showing a light source part and a light guide part of the display device according to the seventh exemplary embodiment of the present invention, FIG. 12B is a cross-sectional view taken along a line IV-IV' of FIG. 12A, and FIG. 12C is a plan view showing the light source part and the light guide part of FIG. 12A. For the convenience of explanation, FIGS. 12A to 12C show the main light guide part MLGP, the sub-light guide part SLGP, and the light source part disposed on the same plane. Since the portion of the main light guide part MLGP is overlapped with the sub-light guide part SLGP to be disposed in the same row and column when viewed from the top, the overlapped row and column are assigned with the same reference numerals.

Referring to FIGS. 12A to 12C, the backlight unit according to the seventh exemplary embodiment includes the light source part to provide the light to the display panel PNL and the light guide plate to guide the light to the display panel PNL.

The light guide part includes the main light guide part MLGP and the sub-light guide parts SLGP having a size smaller than that of the main light guide part MLGP. When viewed from the top, the main light guide part MLGP is overlapped with the sub-light guide parts SLGP. Accordingly, when viewed from the display panel PNL, the main light guide part MLGP and the sub-light guide parts SLGP seem to be one light guide plate. The light guide part includes the light emitting areas LOA when viewed from the top. The light emitting areas LOA are arranged in a matrix form and provide the light to the display area DA of the display panel PNL. The main light guide part MLGP includes a plurality of light exit areas A1 and a plurality of transmission areas B1, which correspond to the light emitting areas LOA.

The first and the second light source blocks LS1 and LS2 are respectively disposed at both sides of the main light guide part MLGP. In detail, the first and the second light source blocks LS1 and LS2 are respectively disposed at both sides of the main light guide part MLGP in the row direction to face each other while interposing the main light guide part MLGP therebetween. Each of the first and the second light source blocks LS1 and LS2 extends in the column direction and includes M light sources corresponding to the columns. In the seventh exemplary embodiment, the "M" is 6.

The light exit areas A1 are disposed in the column corresponding to the light source block along a direction substantially in parallel to a direction in which the light source blocks are arranged. In the seventh exemplary embodiment, the light exit areas A1 correspond to the light source block of the third column C3 corresponding to the first light source block LS1 and the light source block of the sixth column C6 corresponding to the second light source block LS2. Areas except for the light exit areas A1 correspond to the transmission areas B1, e.g., the light emitting areas LOA of the first, the second, the fourth, the fifth, the seventh, and the eighth columns C1, C2, C4, C5, C7 and C8.

The sub-light guide parts SLGP include first, second, and third sub-light guide parts SLGP1, SLGP2, and SLGP3 each having a size smaller than that of the main light guide part MLGP and are disposed under the main light guide part MLGP. The first to the third sub-light guide parts SLGP1 to SLGP3 are spaced apart from each other. When viewed from the top, the first and the second sub-light guide parts SLGP1 and SLGP2 are spaced apart from each other while interposing the light emitting area LOA of the third column C3 among the first light exit areas A1, and the second and the third sub-light guide parts SLGP2 and SLGP3 are spaced apart from each other while interposing the light emitting area LOA of the sixth column C6 among the first light exit areas A1.

The first to the third sub-light guide parts SLGP1 to SLGP3 are overlapped with the transmission areas B1 of the main light guide part MLGP. The first to the third sub-light guide parts SLGP1 to SLGP3 include first, second, and third light exit areas A2, A3, and A4 corresponding to the transmission areas B1 of the main light guide part MLGP and do not include separate transmission areas.

Similar to the first light exit areas A1 the second to fourth light exit areas A2 to A4 are disposed in corresponding columns in accordance with the arrangement of the light source blocks. In the seventh exemplary embodiment, the light source part includes the third light source block LS3 and the fourth light source block LS4 arranged in the column direction with respect to the first sub-light guide part SLGP1, and the second light exit areas A2 correspond to the light emitting areas LOA of the first and the second columns C1 and C2. In addition, the light source part includes the fifth light source block LS5 and the sixth light source block LS6 arranged in the column direction with respect to the second sub-light guide part SLGP2, and the third light exit areas A3 correspond to the light emitting areas LOA of the fourth and the fifth columns C4 and C5. Further, the light source part includes the seventh light source block LS7 and the eighth light source block LS8 arranged in the column direction with respect to the third sub-light guide part SLGP3, and the fourth light exit areas A4 correspond to the light emitting areas LOA of the seventh and the eighth columns C7 and C8.

In the backlight unit having the above-mentioned structure, the path of the light traveling through the light source part and the light guide part is as follows.

A first light P1 emitted from the first light source block LS1 to an eighth light P8 emitted from the eighth light source block LS8 are incident into the main light guide part MLGP or the sub-light guide parts SLGP through the light incident surface LIS of the main light guide part MLGP or the sub-light guide parts SLGP. The traveling paths of the first light P1 to the eighth light P8 are changed in the closest area among the light exit areas of the main light guide part MLGP or the sub-light guide parts SLGP by the light exit pattern LOP and the first reflective sheet RF1, and thus the first light P1 to the eighth light P8 travel toward the display panel PNL through the light exit surface LOS of the main light guide part MLGP.

Here, the light sources of the first to the eighth light source blocks LS1 to LS8 correspond to the light emitting areas LOA arranged in corresponding rows in an one-to-one correspondence. Accordingly, when the number of the light sources is M, the number of the rows of the light emitting areas LOA is M. In the plan view shown in FIG. 12C, the light emitted from each light source has been represented by an arrow. The light travels toward the display panel PNL in the light emitting area LOA at which the arrow is pointed. As an example, the light emitted from the light source corresponding to the fifth row of the sixth light source block LS6 is emitted from the light emitting area LOA arranged in the fifth column C5 by the fifth row of the second sub-light guide part SLGP2.

As described above, when the light source part includes the first to the eighth light source blocks, each of the first to the eighth light source blocks correspond to the light emitting areas in one column, and each light source corresponds to one of the light emitting areas LOA. Since ON and OFF operations of each light source are independently operated, the amount of the light emitted from the light emitting areas LOA may be controlled in accordance with the ON and OFF operations of each light source. That is, the two-dimensional local dimming method may be applied to the backlight unit.

Here, the light source blocks are disposed at both sides of the main light guide part MLGP and both sides of the sub-light guide parts SLGP, and thus the main light guide part MLGP may drive the light emitting areas of rows corresponding to the number of the light source blocks. In addition, since the light source blocks are disposed at both sides of each of the first to the third sub-light guide parts, each of the first to the third sub-light guide parts may drive the light emitting areas LOA in the columns two times larger than the number of the sub-light guide parts. That is, in the case that the number of the sub-light guide parts is n, the number of the columns (N) is 2+2n.

In the light source part, it is satisfied that each light source corresponds to any one of the light emitting areas LOA, and the light source part is not required to be disposed at both sides of the main light guide part MLGP and each of the sub-light guide parts SLGP.

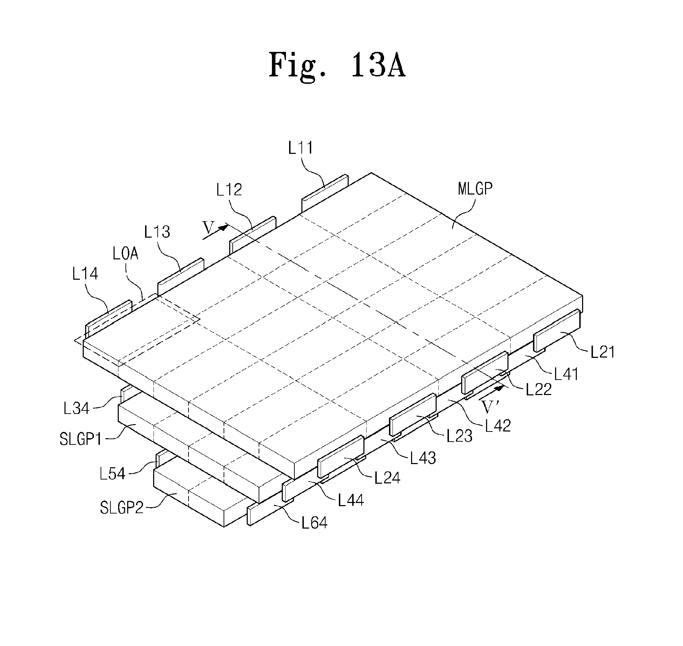

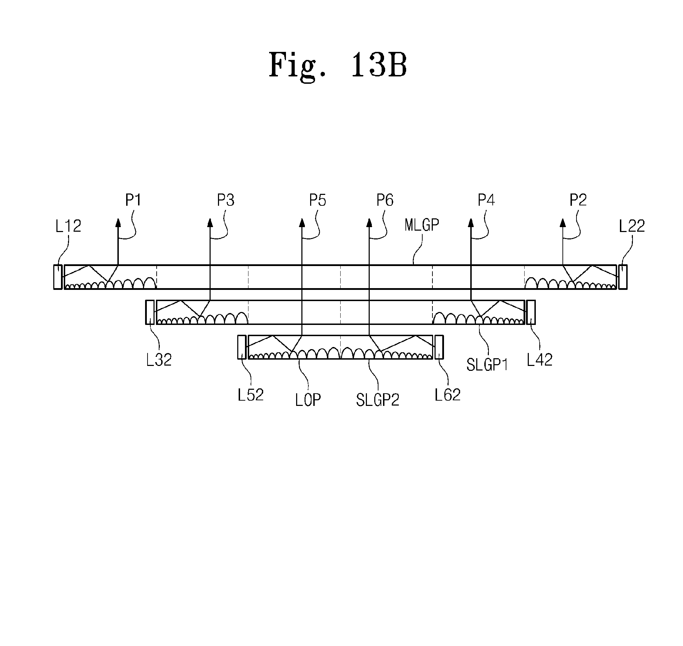

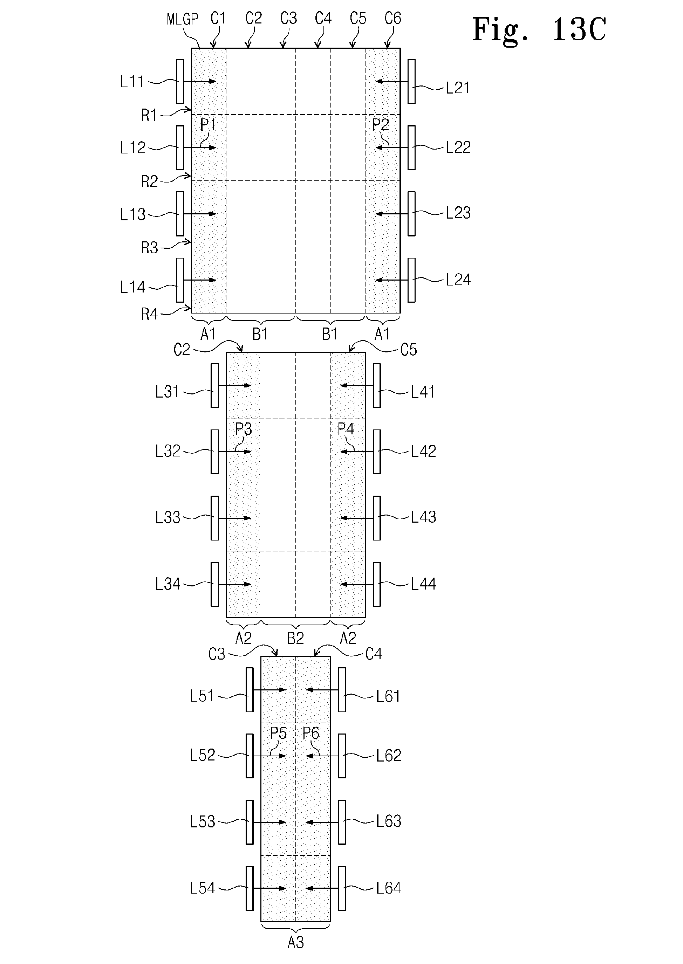

In an eight exemplary embodiment, the main light guide part and the sub-light guide parts may be stacked in various ways. FIG. 13A is a perspective view showing a light source part and a light guide part of the display device according to an eighth exemplary embodiment of the present invention, FIG. 13B is a cross-sectional view taken along a line V-V' of FIG. 13A, and FIG. 13C is a plan view showing the light source part and the light guide part of FIG. 13A. For the convenience of explanation, FIGS. 13A to 13C show the main light guide part MLGP, the sub-light guide part SLGP, and the light source part disposed on the same plane. Since the portion of the main light guide part MLGP is overlapped with the sub-light guide parts SLGP to be disposed in the same row and column when viewed from the top, the overlapped row and column are assigned with the same reference numerals. In the present exemplary embodiment, the light emitting areas LOA are arranged in M rows by N columns (M is 4 and N is 6).

Referring to FIGS. 13A to 13C, the backlight unit according to the eighth exemplary embodiment includes the light source part to provide the light to the display panel PNL and the light guide plate to guide the light to the display panel PNL.

When viewed from the top, the light guide part includes a plurality of light emitting areas LOA and includes a main light guide part MLGP, a first sub-light guide part SLGP1 having a size smaller than that of the main light guide part MLGP, and a second sub-light guide part SLGP2 having a size smaller than that of the first sub-light guide part SLGP1. Each of the first and the second sub-light guide parts SLGP1 and SLGP2 is overlapped with the light emitting areas LOA corresponding to at least one row, and an area in which the first sub-light guide part SLGP1 is overlapped with the light emitting areas LOA is different from an area in which the second sub-light guide part SLGP2 is overlapped with the light emitting areas LOA. That is, the main light guide part MLGP and the first sub-light guide part SLGP1 are partially overlapped with each other, and the second sub-light guide part SLGP2 is overlapped with a portion of the overlapped area of the main light guide part MLGP and the first sub-light guide part SLGP1. Accordingly, when viewed from the display panel PNL, the main light guide part MLGP and the first and the second sub-light guide parts SLGP1 and SLGP2 seem to be one light guide plate.

The light emitting areas LOA are arranged in a matrix form and provide the light to the display area DA of the display panel PNL. The main light guide part MLGP includes a plurality of first light exit areas A1 and a plurality of first transmission areas B1, which correspond to the light emitting areas LOA. The first light exit areas A1 correspond to the light emitting areas LOA of first and sixth columns C1 and C6.

First and second light source blocks LS1 and LS2 are respectively disposed at both sides of the main light guide part MLGP. In detail, the first and the second light source blocks LS1 and LS2 are respectively disposed at both sides of the main light guide part MLGP in the row direction to face each other while interposing the main light guide part MLGP therebetween.

The first sub-light guide part SLGP1 is disposed under the main light guide part MLGP. The first sub-light guide part SLGP1 corresponds to the first transmission areas B1 of the main light guide part MLGP. The first sub-light guide part SLGP1 includes a plurality of second light exit areas A2 and a plurality of second transmission areas B2 (or sub-transmission areas). The second transmission areas B2 correspond to the light emitting areas LOA of third and fourth columns C3 and C4. Thus, the second light exit areas A2 of the second and the fifth columns C2 and C5 corresponding to the first light exit areas A1 are spaced apart from each other by the second transmission areas B2.

The second sub-light guide part SLGP2 is disposed under the first sub-light guide part SLGP1. The second sub-light guide part SLGP2 corresponds to the second transmission areas B2. The second sub-light guide part SLGP2 includes a plurality of third light exit areas A3. The third light exit areas A3 correspond to the light emitting areas of the third and fourth columns C3 and C4, and the second sub-light guide part SLGP2 does not include transmission areas.

The first to third light exit areas A1 to A3 are arranged in corresponding columns in accordance with arrangements of the light source blocks. In the eighth exemplary embodiment, the light source part includes first and second light source blocks LS1 and LS2 respectively disposed at both sides of the main light guide part MLGP while interposing the main light guide part MLGP therebetween, third and fourth light source blocks LS3 and LS4 respectively disposed at both sides of the first sub-light guide part SLGP1 while interposing the first sub-light guide part SLGP1 therebetween, and fifth and sixth light source blocks LS5 and LS6 respectively disposed at both sides of the second sub-light guide part SLGP2 while interposing the second sub-light guide part SLGP2 therebetween.

The light source blocks correspond to the columns of the light emitting areas LOA in an one-to-one correspondence. In detail, the first, second, third, fourth, fifth, and sixth light source block LS1, LS2, LS3, LS4, LS5, and LS6 respectively correspond to the first, sixth, second, fifth, third, and fourth columns C1, C6, C2, C5, C3, and C4 of the light emitting areas LOA.

In the backlight unit having the above-mentioned structure, the path of the light traveling through the light source part and the light guide part is as follows.

A first light P1 emitted from the first light source block LS1 and a second light P2 emitted from the second light source block LS2 are incident into the main light guide part MLGP through the light incident surface LIS of the main light guide part MLGP. The traveling paths of the first light P1 and the second light P2 are changed in the closest first light exit areas A1 among the first light exit areas A1 of the main light guide part MLGP, and thus the first light P1 and the second light P2 travel toward the display panel PNL through the light exit surface LOS of the main light guide part MLGP.

A third light P3 emitted from the third light source block LS3 and a fourth light P4 emitted from the fourth light source block LS3 are incident into the first sub-light guide part SLGP1 through the light incident surface LIS of the first sub-light guide part SLGP1. The traveling paths of the third light P3 and the fourth light P4 are changed in the closest second light exit areas A2 among the second light exit areas A2 of the first sub-light guide part SLGP1, and thus the third light P3 and the fourth light P4 travel toward the display panel PNL through the light exit surface LOS of the first sub-light guide part SLGP1 and the first transmission areas B1 of the main light guide part MLGP.

A fifth light P5 emitted from the fifth light source block LS5 and a sixth light P6 emitted from the sixth light source block LS6 are incident into the second sub-light guide part SLGP2 through the light incident surface LIS of the second sub-light guide part SLGP2. The traveling paths of the fifth light P5 and the sixth light P6 are changed in the closest third light exit areas A3 among the third light exit areas A3 of the second sub-light guide part SLGP2, and thus the fifth light P5 and the sixth light P6 travel toward the display panel PNL through the light exit surface LOS of the second sub-light guide part SLGP2, the second transmission areas B2 of the first sub-light guide part SLGP1, and the first transmission areas B1 of the main light guide part MLGP.

Here, the light sources of the first to the sixth light source blocks LS1 to LS6 correspond to the light emitting areas LOA arranged in corresponding rows in an one-to-one correspondence. Accordingly, when the number of the light sources is M, the number of the rows of the light emitting areas LOA is M. In the present exemplary embodiment, the "M" is 4. In the plan view shown in FIG. 13C, the light emitted from each light source has been represented by an arrow. The light travels toward the display panel PNL in the light emitting area LOA at which the arrow is pointed.

As described above, when the light source part includes the first to the sixth light source blocks, each of the first to the sixth light source blocks correspond to the light emitting areas in one column, and each light source corresponds to one of the light emitting areas LOA. Since ON and OFF operations of each light source are independently operated, the amount of the light emitted from the light emitting areas LOA may be controlled in accordance with the ON and OFF operations of each light source. That is, the two-dimensional local dimming method may be applied to the backlight unit.

Here, the light source blocks are disposed at both sides of the main light guide part MLGP and both sides of the sub-light guide parts SLGP, and thus the main light guide part MLGP may drive the light emitting areas of rows corresponding to the number of the light sources of each light source block. In addition, since the light source blocks are disposed at both sides of each of the first and the second sub-light guide parts, each of the first to the third sub-light guide parts may drive the light emitting areas LOA in the columns two times larger than the number of the sub-light guide parts. That is, in the case that the number of the sub-light guide parts is n, the number of the columns (N) is 2+2n.

In the light source part, it is satisfied that each light source corresponds to any one of the light emitting areas LOA, and the light source part is not required to be disposed at both sides of the main light guide part MLGP and each of the sub-light guide parts SLGP.

In addition, the number of the light sources included in each light source block is uniform in the display device regardless of the main light guide part MLGP and the sub-light guide parts SLGP, but it should not be limited thereto or thereby. For instance, when the light source block disposed at one side of the main light guide part MLGP includes p light sources, the light source block disposed at the other of the main light guide part MLGP includes q light sources, which is much more than p. Therefore, the number of the light emitting areas LOA may be adjusted and shape and area of the light emitting areas LOA may be controlled.

The transparent sheet TF may be omitted in the above exemplary embodiments of the invention. Moreover, the main light guide part MLGP and the sub-light guide part SLGP may be formed as a single piece. In this case, the reflective sheet may be formed as a single piece, or may be laminated or coated with a reflective material.

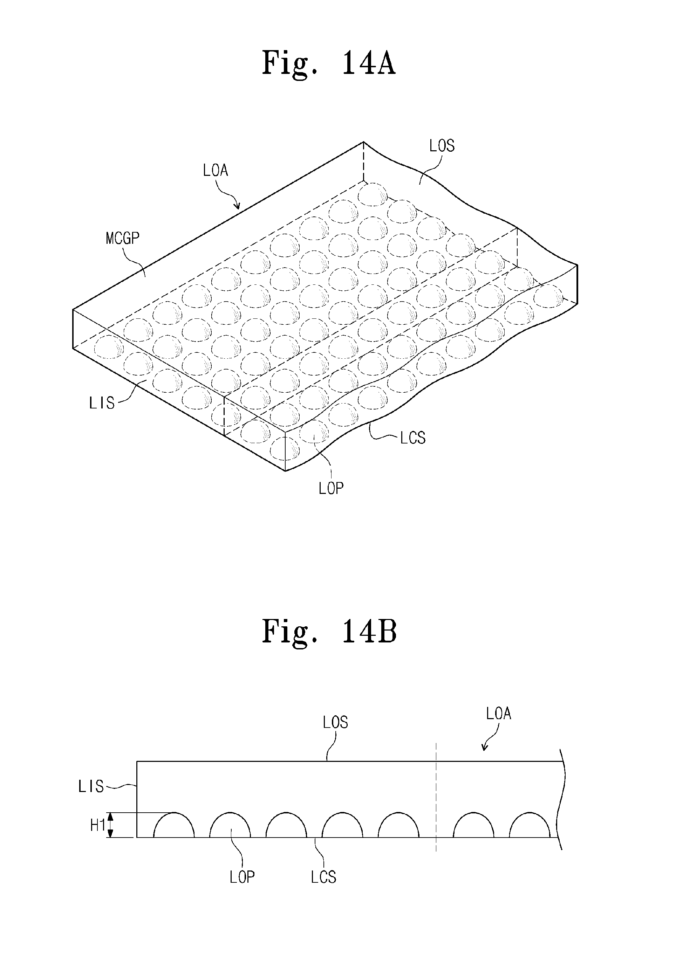

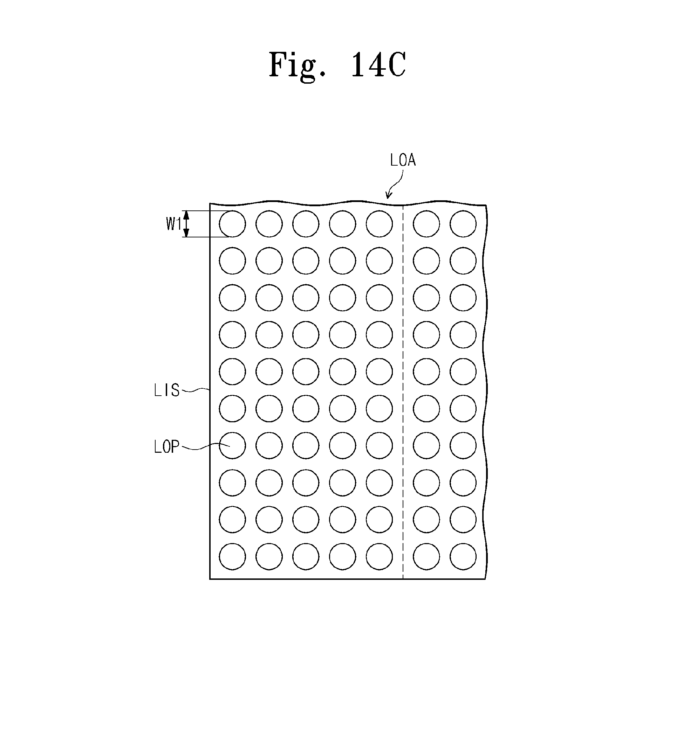

Hereinafter, the light exit pattern LOP described above will be described in detail with reference to FIGS. 14A, 14B, and 14C. FIGS. 14A, 14B, and 14B are perspective, side, and plan views, respectively, showing an exit pattern formed in the light guide part together with a light guide plate of the light guide part. Here, the term of "light guide plate" indicates the main light guide part MLGP and the sub-light guide parts SLGP. For the convenience of explanation, the light exit pattern LOP disposed in one of the light exit areas of the main light guide part MLGP of the first exemplary embodiment will be described as a representative example.

Referring to FIGS. 14A to 14C, the light exit pattern LOP is formed on the opposite surface LCS of the light guide plate to face the light exit surface LOS and reflects the light. The light exit pattern LOP has a shape concaved to the light exit surface LOS, but it should not be limited thereto or thereby. That is, the light exit pattern LOP has a shape convexed to a direction opposite to the light exit surface LOS. However, since the light exit pattern LOP may be formed on the light exit surface LOS, the light exit pattern LOP may have the shape concaved to the opposite surface LCS or convexed to the opposite direction to the opposite surface LCS.

A total reflection phenomenon occurs on the surface of the light guide plate when the surface of the light guide plate is a mirror surface. Thus, when the light exit pattern LOP is formed on the opposite surface LCS of the light emitting areas, the light is reflected by a reflective surface of the light exit pattern LOP and the path of the light is changed to travel to the light exit surface LOS. Accordingly, the light is concentratedly emitted from the area in which the light exit pattern LOP is formed.

The light exit pattern LOP may be easily formed by a printing method or a laser processing method.

In FIGS. 14A to 14C, the light exit pattern LOP has a semi-circular shape and is arranged in a matrix form, but it should not limited thereto or thereby. The shape, number, size, arrangement, and density of the light exit pattern LOP may be various. For instance, the light exit pattern LOP may have various shapes, e.g., a pyramid shape, a polygonal cylinder shape, a prism shape, etc., and thus the light exit pattern LOP may have various cross-sectional shapes, e.g., a rectangular shape, a triangular shape, etc. The light exit pattern LOP may have a zigzag pattern or may be distributed randomly instead of the matrix form. In the present exemplary embodiment, the light exit pattern LOP is formed on the opposite surface LCS in the concave shape, but it should not be limited to the concave shape. That is, the light exit pattern LOP is formed on the opposite surface LCS in the convex shape or in concavo-convex shape with respect to the opposite surface LCS. Further, the light exit pattern LOP may be integrally formed with the light guide plate, printed on the light guide plate, or may be attached to the light guide plate.

To improve the uniformity of the brightness, width, height, and density of the light exit pattern LOP may be controlled in each light emitting area as follows. In general, since the brightness is degraded as it is far away from the light incident surface LIS, and therefore, it is preferred that at least one of the width W1, the height H1, and the density of the light exit pattern LOP is increased as the light exit pattern LOP becomes far away from the light incident surface LIS so as to improve the uniformity of the brightness.

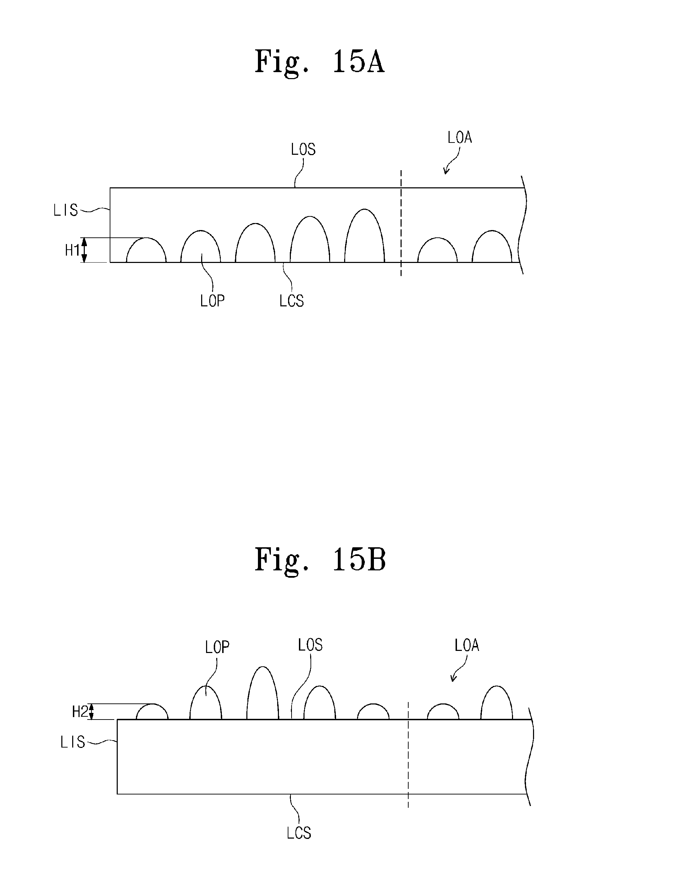

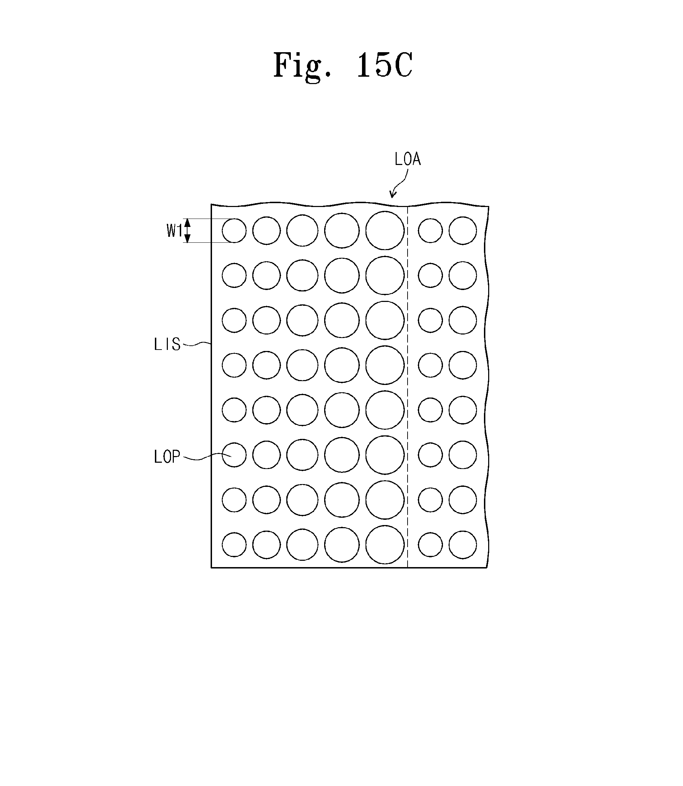

FIGS. 15A and 15B are cross-sectional views showing exit patterns according to various exemplary embodiments of the present invention and FIGS. 15C to 15F are plan views showing exit patterns according to various exemplary embodiments of the present invention.

Referring to FIG. 15A, the height H1 of the light exit pattern LOP increases as the light exit pattern LOP becomes far away from the light incident surface LIS.

Referring to FIG. 15B, the light exit pattern LOP has a protrusion shape protruded from the light exit surface LOS. The height H2 of the light exit pattern LOP has a maximum height at a center of the light emitting area and decrease according to an increase of a distance from the center of the light emitting area.

Referring to FIG. 15C, the width W1 of the light exit pattern LOP may be increased according to the increase of a distance from the light incident surface LIS.

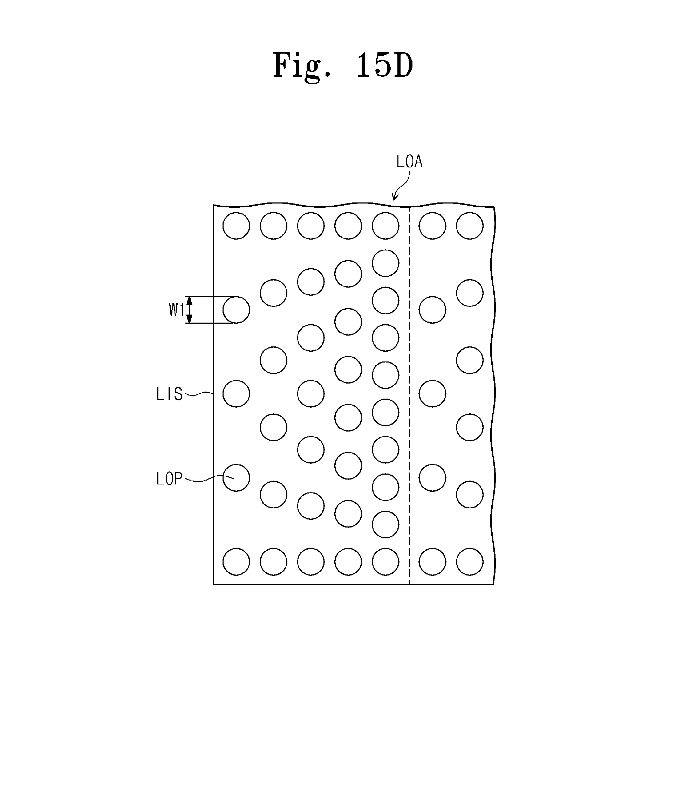

Referring to FIG. 15D, the density of the light exit pattern LOP may be increased according to the increase of a distance from the light incident surface LIS.

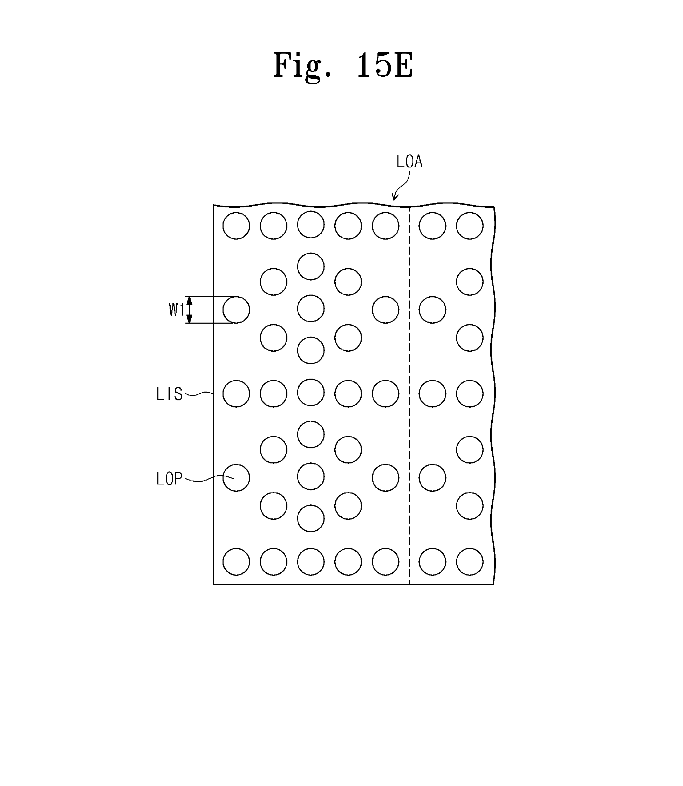

Referring to FIG. 15E, the light exit pattern LOP has the highest density at the center portion of each light emitting area, and the density of the light exit pattern LOP decreases according to the increase of a distance from the center portion in each light emitting area.

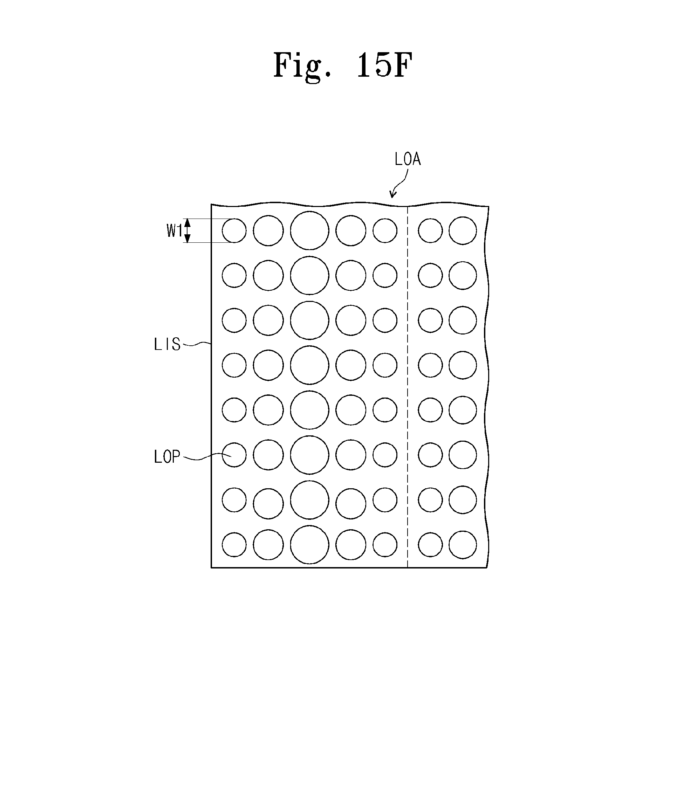

Referring to FIG. 15F, the light exit pattern LOP has the widest width at the center portion of each light emitting area, and the width of the light exit pattern LOP decreases according to the increase of a distance from the center portion in each light emitting area.

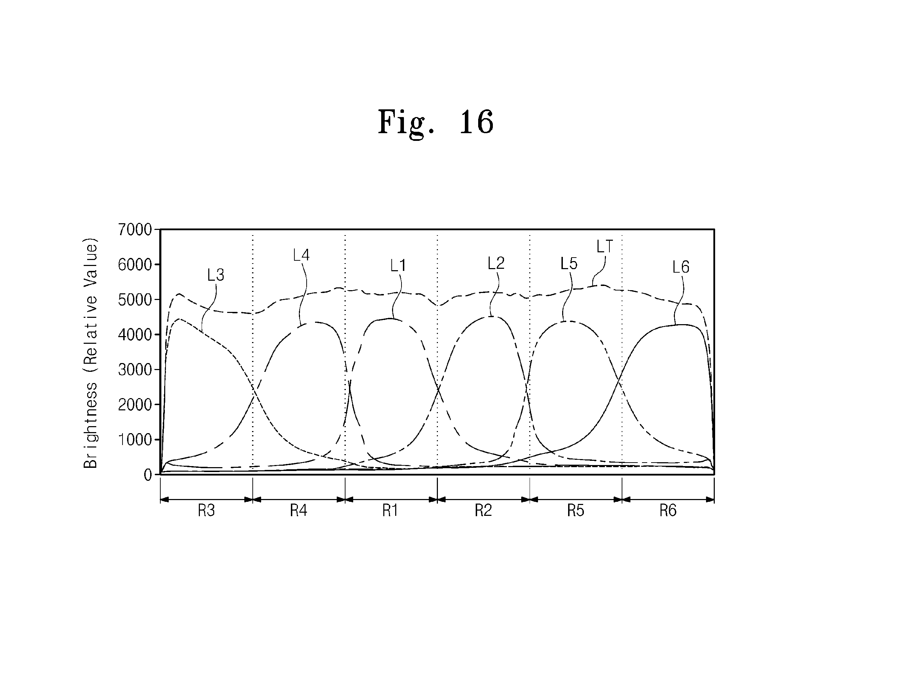

In the above-mentioned embodiments, the reflectivity in each position on the opposite surface LCS is modified by the light exit pattern LOP to secure a uniform brightness throughout the light emitting area.FIG. 16 is a simulated graph showing brightness in a cross-sectional surface in each light emitting area in a backlight unit according to an exemplary embodiment of the present invention. Particularly, the simulated graph shows the brightness in the backlight unit according to the fifth exemplary embodiment. In each graph, the lights emitted from the first to sixth light source blocks are represented by L1 to L6 and the brightness when the first to the sixth light source blocks are turned on is represented by LT. In addition, the light exit areas from which the lights emitted from the first to the sixth light source blocks exit are represented by R1 to R6, and the light exit areas correspond to first to sixth columns of the light emitting areas.

Referring to FIG. 16, the light emitted from the first to the sixth light source blocks exit from corresponding light exit areas, respectively. That is, the light emitted from the first light source block exits from the light exit area R1 and the light emitted from the second light source block exits from the light exit area R2. As described above, since the first to the sixth light source blocks provides the light mainly to the corresponding light exit areas, respectively, the brightness of the lights exiting from the light exit areas may be controlled by controlling the ON and OFF operations of the first to the sixth light source blocks.

In the present exemplary embodiment, the graphs of the lights emitted from the light source blocks have a normal distribution curve. The graph of the light may be controlled by the height, shape, width, and density of the light exit pattern, and thus the lights emitted from the light source blocks respectively exit from the corresponding light exit areas, respectively. In addition, although the lights may travel toward adjacent light exit areas, the amount of the light emitted from a light exit area may be uniformly controlled by controlling the amount of the light travel toward adjacent light emitting area and incident to the light exit area from the adjacent light exit areas. For instance, when assuming that A light exiting area and B light exiting area exist.The amount of lighttravels to the B light exit area from the A light exit area and the light travels to the A light area from the B light exit area will be same, thereby the amount of the light exiting from the light exit areas may be maintained in the desired range.

In addition, the above-described exemplary embodiments have been explained on the assumption that the light incident into the light guide part from the light source blocks travels straight in the direction substantially vertical to the light incident surface LIS. However, the light incident into the light guide part from the light source blocks is partially diffused toward both sides of the light guide part while traveling in the direction substantially vertical to the light incident surface LIS. As a result, it is difficult to distinguish the rows of the light emitting areas due to the diffusion of the light incident into the light guide plate from the light source blocks. Therefore, a pattern (hereinafter, referred to as light guide pattern GP) may be additionally formed on the light guide part described above to allow the light incident into the light guide plate from the light source blocks to travel straight.

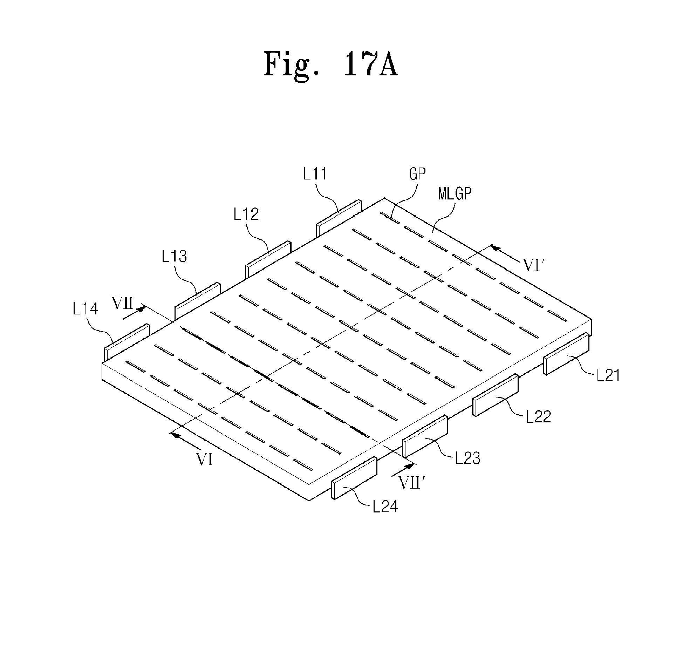

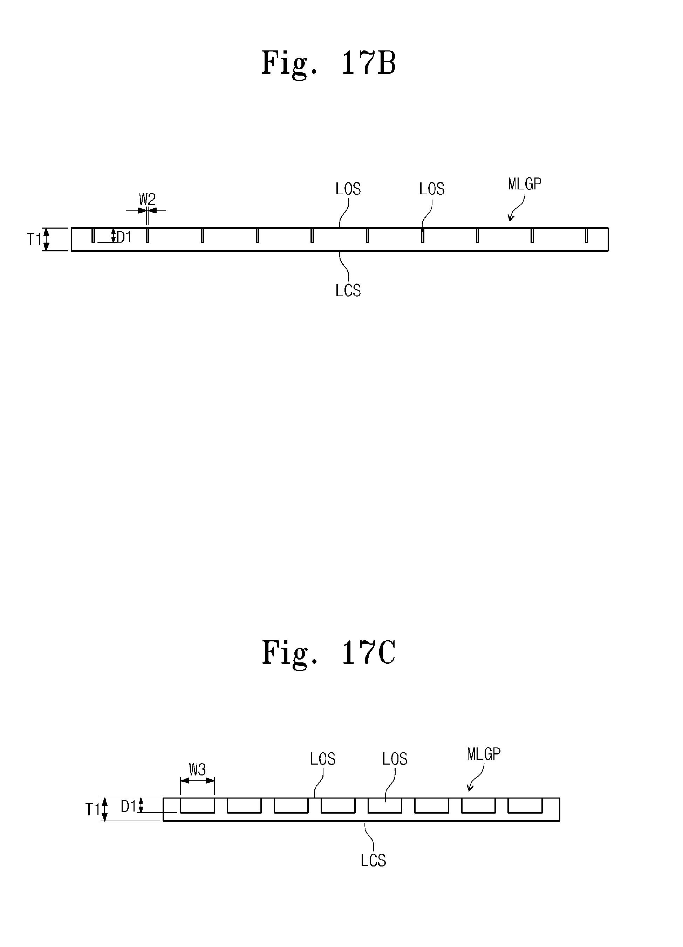

FIG. 17A is a perspective view showing a light source part and a light guide part to explain a light guide pattern GP, FIG. 17B is a cross-sectional view taken along a line VI-VI' of FIG. 17A, and FIG. 17C is cross-sectional view taken along a line VII-VII' of FIG. 17A. For the convenience of explanation, FIGS. 17A to 17C show the light guide pattern GP formed on the main light guide part MLGP according to the first exemplary embodiment, but it should not be limited thereto or thereby. That is, the light guide pattern GP may be applied to the light guide plates according to the other embodiments.

Referring to FIGS. 17A to 17C, the light guide pattern GP reflects the light to prevent the light incident into the light guide part from diffusing to the side surfaces of the light guide part. In the present exemplary embodiment, the light guide pattern GP extends from the light exit surface LOS toward the opposite surface LCS, but on the contrary, the light guide pattern GP may extends from the opposite surface LCS toward the light exit surface LOS and have the same shape as that of the light guide pattern GP formed from the light exit surface LOS to the opposite surface LCS.

The light guide pattern GP has a relatively wide width in a direction substantially vertical to the light incident surface LIS, e.g., a third direction, and a relatively narrow width in a direction substantially in parallel to the light incident surface LIS, e.g., a first direction. In FIGS. 17B and 17C, the width in the third direction of the light guide pattern GP has been represented by W3 and the width in the first direction of the light guide pattern GP has been represented by W2. In addition, the light guide pattern GP has a depth d1 smaller than a thickness T1 of the light guide part in a second direction. The reason why the width W3 in the third direction of the light guide pattern GP is greater than the width W2 in the second direction of the light guide pattern GP is to allow the light to travel straight in the third direction. In addition, when the depth d1 of the light guide pattern GP is smaller than the thickness T1of the light guide part, a bright line may be prevented from occurring on the light guide part even though the light guide pattern GP is formed in the light guide part.

The light guide pattern GP is formed in a plural number and the light guide patterns GP are formed over the entire area of the light guide plate. The light guide patterns GP are spaced apart from each other and to be parallel to each other. In the present exemplary embodiment, the light guide patterns GP are arranged in a matrix form. In detail, the light guide patterns GP are arranged in a line along the third direction and spaced apart from each other at regular intervals along the first direction, but the arrangement of the light guide patterns GP should not be limited thereto or thereby. For instance, the light guide patterns GP may be randomly arranged while not being connected to each other. As described above, when the light guide patterns GP are randomly arranged, the bright line, which is caused by the light guide pattern GP, may be prevented.

In the present exemplary embodiment, the light guide pattern GP has a rectangular shape in the cross-sectional views taken along the lines VI-VI' and VII-VII', but the light guide pattern GP should not be limited to the rectangular shape. That is, the light guide pattern GP may have various shapes, e.g., a streamline shape, a lozenge shape, an oval shape, etc., as long as the width W3 in the third direction of the light guide pattern GP is greater than the width W2 in the first direction of the light guide pattern GP. The light guide pattern GP may be easily formed by a printing method or a laser processing method. As described above, when the light guide pattern GP is formed on the light guide part, the light emitted from the light source blocks tends to travel in the straight line compared to that of the light when no light guide pattern GP is formed on the light guide part.

In addition, although not shown in figures, the light exit pattern LOP and the light guide pattern GP are formed on the same surface or on different surfaces, and not overlapped with each other when viewed from the top.

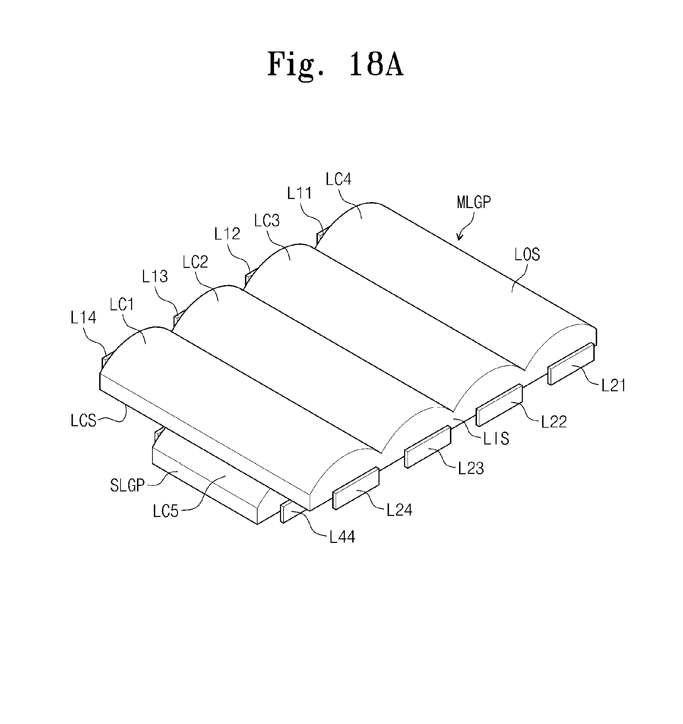

FIG. 18A is perspective views showing lenticular-type light guide patterns LC1 to LC8 formed on the backlight unit according to an exemplary embodiment of the present invention. FIG. 18A shows the lenticular-type light guide patterns LC1 to LC8 formed on the main light guide part MLGP and the sub-light guide part SLGP included in the backlight unit, but the lenticular-type light guide patterns LC1 to LC8 may be applied to the light guide part according to the other exemplary embodiments.

Referring to FIG. 18A, M lenticular-type light guide patterns LC1 to LC8 are formed on the light exit surfaces LOS of the main light guide part MLGP and the sub-light guide part SLGP to respectively correspond to the light source blocks. For instance, the number of the lenticular-type light guide patterns LC1 to LC8 corresponds to the number of the light sources included in the light source block adjacent to the light incident surfaces LIS.

Each of the lenticular-type light guide patterns LC1 to LC8 extends in the row direction and has a convex lens shape in which both ends in the first direction of each the lenticular-type light guide patterns LC1 to LC8 are concaved and a center portion of each the lenticular-type light guide patterns LC1 to LC8 is convex. Preferably, the lenticular-type light guide patterns LC1 to LC8 include the same material as the main light guide part MLGP and the sub-light guide part SLGP. In addition, the lenticular-type light guide patterns LC1 to LC8 may be integrally formed with the main light guide part MLGP or the sub-light guide part SLGP.

When the lenticular-type light guide patterns LC1 to LC8 are formed on the main light guide part MLGP and the sub-light guide part SLGP, the light incident into the main light guide part MLGP and the sub-light guide part SLGP exits from the convexed portion of each of the lenticular-type light guide patterns LC1 to LC8 and does not exit from the concaved portion of each of the lenticular-type light guide patterns LC1 to LC8. Consequently, when the lenticular-type light guide patterns LC1 to LC8 are formed on the main light guide part MLGP and the sub-light guide part SLGP, the light emitting areas in the row corresponding to the light source block may be precisely turned on and off, and thus the local dimming is effectively achieved.

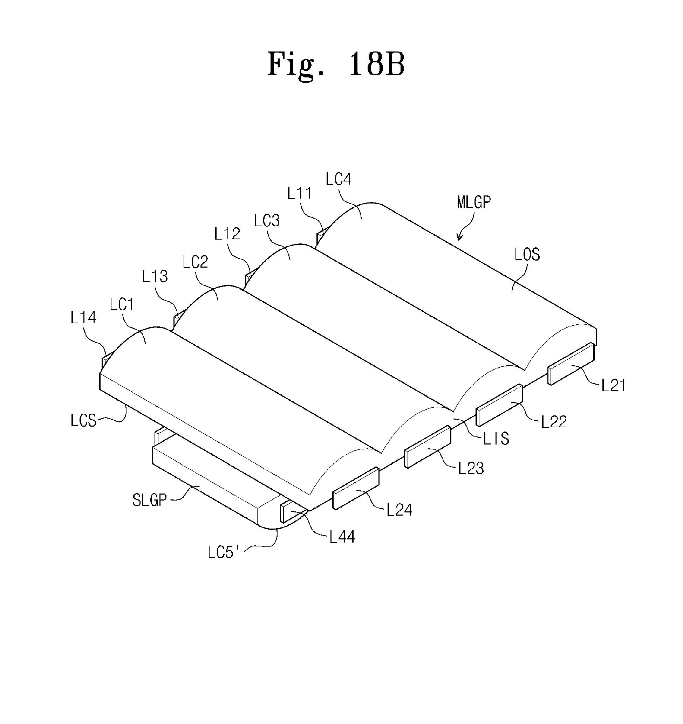

FIG. 18B is perspective views showing lenticular-type light guide patterns formed on the backlight unit according to another exemplary embodiment of the present invention.

Referring to FIG 18B, the lenticular-type light guide patterns LC1, LC2, LC3, and LC4 are formed on the light exit surface LOS of the main light guide part MLGP and lenticular-type light guide patterns LC5', LC6', LC7', and LC8' are formed on the opposite surface LCS of the sub-light guide part SLGP.

In addition, although not shown in figures, the lenticular-type light guide patterns shown in FIGS. 18A and 18B may be replaced with various micro-patterns, e.g., prism-type patterns.

In the display device according to the exemplary embodiments, the light emitting areas are arranged in the two-dimensional matrix and independently operated, and thus the two-dimensional local dimming may be easily achieved. As a result, a color separation of black and white colors may be easily accomplished by the ON and OFF operations of the light sources, and power consumption and heat in the light sources may be reduced. In addition, the light sources corresponding to the display area are applied to the edge-illumination type backlight unit, so that the thickness of the display device is reduced. Therefore, the display device is slimmed.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A backlight unit comprising:
a light guiding plate, the light guiding plate comprising a main light guide part that includes a first pattern and a sub-light guide part that includes a second pattern; and
a light source part comprising:
a main light source part that provides the light to the main light guide part;
a sub-light source part that provides the light to the sub-light guide part and is partially overlapped with a portion of the main light guide part,
wherein the first pattern and the second pattern are not overlapped with each other when viewed from a top.

2. The backlight unit of claim 1, wherein the sub-light guide part is smaller than the main light guide part.

3. The backlight unit of claim 2, wherein the main light source part comprises a first light source block and a second light source block, which are disposed at both sides of the main light guide part, and the sub-light source part comprises a third light source block and a fourth light source block, which are disposed at both sides of the sub-light guide part.

4. The backlight unit of claim 3, wherein third and fourth light source blocks are overlapped with the main light guide part.

5. The backlight unit of claim 3, wherein each of the first to the fourth light source blocks comprises at least one light source group.

6. The backlight unit of claim 5, wherein the light source group comprises at least one light source.

7. The backlight unit of claim 5, wherein the light source group is provided in a plural number and the light source groups are independently driven.

8. The backlight unit of claim 7, further comprising a light source part control unit to separately control a brightness of the light source groups in response to a local dimming signal obtained by analyzing an input image.

9. The backlight unit of claim 3, wherein the first to the fourth light source blocks are arranged in directions substantially parallel to each other.

10. The backlight unit of claim 3, further comprising a reflective sheet disposed between the main light guide part and the third and fourth light source blocks.

11. The backlight unit of claim 10, further comprising a transparent film disposed between the main light guide part and the sub-light guide part to correspond to an area in which the reflective sheet is not disposed.

12. The backlight unit of claim 1, wherein the sub-light guide part is provided in a plural number.

13. The backlight unit of claim 12, wherein each of the sub-light guide parts is spaced apart from each other.

14. The backlight unit of claim 12, wherein the sub-light guide parts are partially overlapped with each other and areas where each of the sub-light guide part is overlapped with the main light guide part are different from each other.

15. The backlight unit of claim 1, wherein each of the main light guide part and the sub-light guide part comprises:
a light incident surface adjacent to the light source part, into which the light is incident;
a light exit surface connected to the light incident surface, from which the light exits; and
an opposite surface connected to the light incident surface to face the light exit surface.

16. The backlight unit of claim 15, wherein the first and the second patterns are disposed on the opposite surface.

17. The backlight unit of claim 16, wherein the second pattern is disposed on an entire surface of the opposite surface.

18. The backlight unit of claim 16, wherein at least one of the first pattern and the second pattern is protruded from the light exit surface to the opposite surface or from the opposite surface to the light exit surface to have a three-dimensional shape and disposed on at least one of the opposite surface and the light exit surface.

19. The backlight unit of claim 16, wherein at least one of a height, a width, and a density of at least one of the first pattern and the second pattern is increased according to an increase of a distance from the light incident surface.

20. The backlight unit of claim 1, wherein the main light guide part comprises a plurality of light emitting areas arranged in M rows by N columns (M is a natural number equal to or greater than 1 and N is a natural number equal to or greater than 3), the light emitting areas are divided into a first area in which the first pattern is disposed and a second area in which the second pattern is disposed, and the sub-light guide part is located to correspond to the second area.

21. The backlight unit of claim 20, wherein the sub-light guide part is smaller than the main light guide part and is overlapped with at least one row of the second area.

22. The backlight unit of claim 20, wherein the light source part comprises first and second light source blocks disposed at both sides in the row direction of the main light guide part and third and fourth light source blocks disposed at both sides in the row direction of the sub-light guide part, and at least one of the third and fourth light source blocks is overlapped with at least one row of the light emitting areas.

23. The backlight unit of claim 22, wherein each of the first to the fourth light source blocks comprises at least one light source group and the light source group comprises at least one light source.

24. The backlight unit of claim 23, wherein the light source group included in the first light source block is provided in a plural number, and the light source groups correspond to the light emitting areas in an one-to-one correspondence, which are most adjacent to the light source groups in the first area.

25. The backlight unit of claim 24, wherein the light source group included in the second light source block is provided in a plural number, and the light source groups correspond to the light emitting areas in an one-to-one correspondence, which are most adjacent to the light source groups in the second area.

26. The backlight unit of claim 20, wherein the sub-light guide part is provided in a plural number, the sub-light guide parts correspond to the light emitting areas arranged in different columns, and the sub-light guide parts are spaced apart from each other while interposing the light emitting area arranged in at least one column therebetween.

27. The backlight unit of claim 20, wherein the sub-light guide part is provided in a plural number, the sub-light guide parts commonly correspond to the light emitting areas arranged in to at least one row, and areas each in which each of the sub-light guide part is overlapped with the light emitting areas are different from each other.

28. The backlight unit of claim 20, further comprising a light guide pattern disposed on at least one of the main light guide part and the sub-light guide part and guiding the light to travel in the column direction.

29. The backlight unit of claim 28, wherein the light guide pattern is protruded from the light exit surface to the opposite surface or from the opposite surface to the light exit surface to reflect the light, has a greater width in a direction vertical to the light incident surface than a width in a direction parallel to the light incident surface, and has a smaller width in a thickness direction of the light guide part than a thickness of the light guide part.

30. The backlight unit of claim 29, wherein the light guide pattern comprises M prism patterns or M lenticular patterns, which are disposed on the light exit surface and respectively correspond to the rows, each of the M prism patterns and each of the M lenticular patterns has a convex center portion in a cross-sectional surface parallel to the light incident surface and concaved end portions in the cross-sectional surface parallel to the light incident surface, and the M prism patterns and the M lenticular patterns extend in a direction vertical to the light incident surface.

31. A backlight unit comprising:
a light guiding plate, the light guiding plate comprising a main light guide part that includes a first pattern and a sub-light guide part that includes a second pattern; and
a light source part comprising:
a main light source part that provides the light to the main light guide part;
a sub-light source part that provides the light to the sub-light guide part and is partially overlapped with a portion of the main light guide part,
wherein the first pattern and the second pattern are partially overlapped with each other when viewed from a top.

32. The backlight unit of claim 31, wherein the sub-light guide part is smaller than the main light guide part.

33. The backlight unit of claim 32, wherein the main light source part comprises a first light source block and a second light source block, which are disposed at both sides of the main light guide part, and the sub-light source part comprises a third light source block and a fourth light source block, which are disposed at both sides of the sub-light guide part.

34. The backlight unit of claim 33, wherein third and fourth light source blocks are overlapped with the main light guide part.

35. The backlight unit of claim 33, wherein each of the first to the fourth light source blocks comprises at least one light source group.

36. The backlight unit of claim 35, wherein the light source group comprises at least one light source.

37. The backlight unit of claim 35, wherein the light source group is provided in a plural number and the light source groups are independently driven.

38. The backlight unit of claim 37, further comprising a light source part control unit to separately control a brightness of the light source groups in response to a local dimming signal obtained by analyzing an input image.

39. The backlight unit of claim 31, wherein the sub-light guide part is provided in a plural number.

40. The backlight unit of claim 39, wherein each of the sub-light guide parts is spaced apart from each other.

41. The backlight unit of claim 39, wherein the sub-light guide parts are partially overlapped with each other and areas where each of the sub-light guide part is overlapped with the main light guide part are different from each other.

42. The backlight unit of claim 31, wherein the main light guide part comprises a plurality of light emitting areas arranged in M rows by N columns (M is a natural number equal to or greater than 1 and N is a natural number equal to or greater than 3), the light emitting areas are divided into a first area in which the first pattern is disposed and a second area in which the second pattern is disposed, and the sub-light guide part is located to correspond to the second area.

43. The backlight unit of claim 42, wherein the sub-light guide part is smaller than the main light guide part and is overlapped with at least one row of the second area.

44. The backlight unit of claim 42, wherein the sub-light guide part is partially overlapped with the first area.

45. The backlight unit of claim 44, wherein an overlap region which the sub-light guide part is partially overlapped with the first area extends along at least one side of the sub-light guide part.

46. The backlight unit of claim 44, wherein the overlap region is provided in plural, each region has a different area.
